# EUROPEAN PATENT APPLICATION

(11) **EP 4 793 853 A1**
(43) Date of publication of application: **19.08.2026**
(21) Application number: 24877279.0
(22) Date of filing: 11.10.2024
(51) Int. Cl.: G06Q 10/1053, G06Q 30/0241

(54) **RECRUITMENT AND JOB HUNTING ASSISTANCE SYSTEM, RECRUITMENT AND JOB HUNTING ASSISTANCE METHOD, AND PROGRAM**

(30) Priority: 12.10.2023 JP 2023176624
(71) Applicant: Recruit Co., Ltd., Tokyo 100-6640 (JP)
(72) Inventor: KOMUGI Kiyotaka, Tokyo 100-6640 (JP)
(74) Representative: Piotrowicz, Pawel Jan Andrzej
(86) International application number: PCT/JP2024/036451
(87) International publication number: WO 2025/079685

(57) **Abstract**

A recruitment and job hunting assistance system provides a service of running a recruitment advertisement on a web site. The recruitment and job hunting assistance system includes a creation unit configured to create payment method selection screen information indicating a payment method selection screen for selecting a payment method out of a plurality of payment methods for compensation for placing a recruitment advertisement in a recruitment medium and an output unit configured to output the payment method selection screen information created by the creation unit.

## Description

### TECHNICAL FIELD

The present invention relates to a recruitment and job hunting assistance system, a recruitment and job hunting assistance method, and a program.

Priority is claimed on Japanese Patent Application No. 2023-176624, filed October 12, 2023, the content of which is incorporated herein by reference.

### BACKGROUND ART

Recruiters such as companies recruiting job hunters run recruitment advertisements in various recruiting media such as a recruitment magazine, a newspaper advertisement, and a leaflet. Recently, recruitment advertisements have often been run using the Internet.

There are many services (hereinafter referred to as "recruitment and job hunting assistance services") for running a recruitment advertisement on a web site over a network. When a recruitment and job hunting assistance service is used, a recruiter requests the recruitment and job hunting assistance service to run a recruitment advertisement. When a job hunter applies for the recruitment advertisement, the job hunter prepares job hunter data such as a resume and transmits the prepared resume to the recruiter. When the job hunter is employed by the recruiter, a provider of the recruitment and job hunting assistance service receives an incentive fee from the recruiter.

As techniques of supporting recruitment and job hunting over the Internet, a technique of reducing a risk associated with employment costs is known (for example, see Patent Document 1). In this technique, when a user receives user information indicating that the user has been employed by a company via a predetermined recruitment information service, a fee which is contingent on an employment period of the user in the company and which is paid from the company for the predetermined recruitment information service is determined.

### Citation List

### Patent Document

Patent Document 1: Japanese Patent No. 6680852

### SUMMARY OF INVENTION

### Technical Problem

A procedure for allowing a recruiter to request running of a recruitment advertisement is complicated, and convenience thereof is not satisfactory.

Since a provider of a recruitment and job hunting assistance service cannot see that a job hunter has been employed by a recruiter, the provider cannot see that a fee is to be received from the recruiter even when a job hunter has been employed by the recruiter, and convenience is not satisfactory.

An objective of the present invention is to provide a recruitment and job hunting assistance system, a recruitment and job hunting assistance method, and a program that can improve convenience in a recruitment and job hunting assistance service of running a recruitment advertisement on a web site.

### Solution to Problem

(1) According to an aspect of the present invention, there is provided a recruitment and job hunting assistance system that provides a service of running a recruitment advertisement on a web site, the recruitment and job hunting assistance system including a creation unit configured to create payment method selection screen information indicating a payment method selection screen for selecting a payment method out of a plurality of payment methods for compensation for placing a recruitment advertisement in a recruitment medium and an output unit configured to output the payment method selection screen information created by the creation unit.
(2) Another aspect of the present invention is the recruitment and job hunting assistance system according to the aspect of (1) further including a reception unit configured to receive information indicating a payment method selected by a recruiter having referred to the payment method selection screen and a registration unit configured to store the information indicating a payment method received by the reception unit and identification information of the recruiter in a storage unit in correlation.
(3) Another aspect of the present invention is the recruitment and job hunting assistance system according to the aspect of (1), wherein the plurality of payment methods include lump-sum payment and installment payment of an incentive fee for placing the recruitment advertisement in the recruitment medium.
(4) Another aspect of the present invention is the recruitment and job hunting assistance system according to the aspect of (1), wherein the creation unit creates charging method selection screen information indicating a charging method selection screen for selecting a charging method out of a plurality of charging methods for placing a recruitment advertisement in the recruitment medium, and the output unit outputs the charging method selection screen information created by the creation unit.
(5) Another aspect of the present invention is the recruitment and job hunting assistance system according to the aspect of (1), wherein the reception unit receives information indicating a charging method selected by a recruiter having referred to the charging method selection screen, and the registration unit stores the information indicating a charging method received by the reception unit and identification information of the recruiter in the storage unit in correlation.
(6) Another aspect of the present invention is the recruitment and job hunting assistance system according to the aspect of (1), wherein the plurality of charging methods include charging for employment and charging for running.
(7) Another aspect of the present invention is the recruitment and job hunting assistance system according to the aspect of (1), wherein the creation unit creates the payment method selection screen information when the reception unit receives information indicating the charging for employment.
(8) According to another aspect of the present invention, there is provided a recruitment and job hunting assistance method that is performed by a recruitment and job hunting assistance system that provides a service of running a recruitment advertisement on a web site, the recruitment and job hunting assistance method including creating payment method selection screen information indicating a payment method selection screen for selecting a payment method out of a plurality of payment methods for compensation for placing a recruitment advertisement in a recruitment medium and outputting the created payment method selection screen information.
(9) According to another aspect of the present invention, there is provided a program causing a computer to perform a step of creating payment method selection screen information indicating a payment method selection screen for selecting a payment method out of a plurality of payment methods for compensation for placing a recruitment advertisement in a recruitment medium and a step of outputting the created payment method selection screen information.

### Advantageous Effects of Invention

According to the present invention, it is possible to improve convenience in a recruitment and job hunting assistance service of running a recruitment advertisement on a web site.

### BRIEF DESCRIPTION OF DRAWINGS

[FIG. 1] A diagram illustrating an example of a configuration of an assistance system 1 according to an embodiment.
[FIG. 2] A block diagram illustrating an example of a recruiter terminal 10, a job hunter terminal 20, a recruitment and job hunting assistance system 100, and a wage payment system 200 which are included in the assistance system according to the embodiment.
[FIG. 3] A diagram illustrating an example of a recruitment information input screen.
[FIG. 4] A diagram illustrating an example of a charging method selection screen.
[FIG. 5] A diagram illustrating an example of a payment method selection screen.
[FIG. 6] A diagram illustrating an example of a wage payment service recruiter ID creation screen.
[FIG. 7] A diagram illustrating an example of an operation sequence of the assistance system 1 according to the embodiment.
[FIG. 8] A diagram illustrating an example of an operation sequence of the assistance system 1 according to the embodiment.
[FIG. 9] A diagram illustrating an example of an operation sequence of the assistance system 1 according to the embodiment.
[FIG. 10] A diagram illustrating an example of an operation sequence of the assistance system 1 according to the embodiment.
[FIG. 11] A diagram illustrating an example of an operation sequence of the assistance system 1 according to the embodiment.
[FIG. 12] A diagram illustrating an example of an operation sequence of the assistance system 1 according to the embodiment.
[FIG. 13] A flowchart illustrating an example of an operation flow of the assistance system 1 according to the embodiment.
[FIG. 14] A diagram illustrating another example of an operation sequence of the assistance system 1 according to the embodiment.
[FIG. 15] A flowchart illustrating an example of an operation flow of the assistance system 1 according to the embodiment.
[FIG. 16] A flowchart illustrating an example of an operation flow of the assistance system 1 according to the embodiment.

### DESCRIPTION OF EMBODIMENTS

A recruitment and job hunting assistance system, a recruitment and job hunting assistance method, and a program according to embodiments will be described below with reference to the accompanying drawings. Embodiments described below are only examples, and an embodiment of the present invention is not limited to the following embodiments.

In the drawings used to describe the embodiments, the same constituents having the same functions will be referred to by the same reference signs, and repeated description thereof will be omitted.

"On the basis of XX" mentioned in this specification means "on the basis of at least XX" and includes "on the basis of another element in addition to XX." "On the basis of XX" is not limited to direct use of XX and includes use of results obtained by performing calculation or processing on XX. "XX" is an arbitrary factor (for example, arbitrary information).

### (Embodiments)

Hereinafter, an embodiment of the present invention will be described with reference to the accompanying drawings.

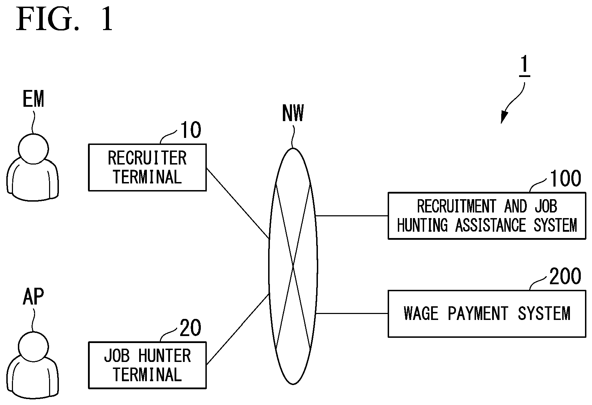

FIG. 1 is a diagram illustrating an example of a configuration of an assistance system 1 according to an embodiment.

For example, the assistance system 1 provides a recruitment and job hunting assistance service to a job hunter AP considering job change. The recruitment and job hunting assistance service includes a job change assistance service. An example of the job change assistance service is providing recruitment information registered by a recruiter EM of a company considering employment of an employee to a job hunter AP considering job change. The service provided by the assistance system 1 is not limited to the job change assistance service, and a job getting assistance service may be provided to a job hunter AP considering getting a job. The assistance system 1 provides, for example, a wage payment service of paying a wage to an employee of a company. An employee of a company includes a job hunter AP employed by the company considering employment of employees using the recruitment and job hunting assistance service.

The assistance system 1 includes, for example, a recruiter terminal 10, a job hunter terminal 20, a recruitment and job hunting assistance system 100, and a wage payment system 200.

The recruiter terminal 10, the job hunter terminal 20, the recruitment and job hunting assistance system 100, and the wage payment system 200 can communicate with each other via a communication network NW. The communication network NW includes the Internet, a wide area network (WAN), a local area network (LAN), a public line, a provider device, a dedicated line, and wireless base stations.

The recruiter terminal 10 is a terminal that is used by a recruiter EM. An example of the recruiter EM is a person who runs a recruitment advertisement on a web site to recruit an employee of a company or the like. For example, a stationary computer device may be used as the recruiter terminal 10, or a portable computer device such as a smartphone or a tablet computer (a tablet PC) may be used.

The job hunter terminal 20 is a terminal that is used by a job hunter AP. An example of the job hunter AP is a person who wants to get a job, to re-get a job, to change a job, or the like. For example, a stationary computer device may be used as the job hunter terminal 20, or a portable computer device such as a smartphone or a tablet computer (a tablet PC) may be used.

The recruitment and job hunting assistance system 100 provides a service of running a recruitment advertisement on a web site of a recruitment and job hunting assistance service. For example, a stationary computer device may be used as the recruitment and job hunting assistance system 100, or a portable computer device such as a smartphone or a tablet computer (a tablet PC) may be used.

The wage payment system 200 provides a service of paying a wage to an employee of a company. For example, a stationary computer device may be used as the wage payment system 200, or a portable computer device such as a smartphone or a tablet computer (a tablet PC) may be used.

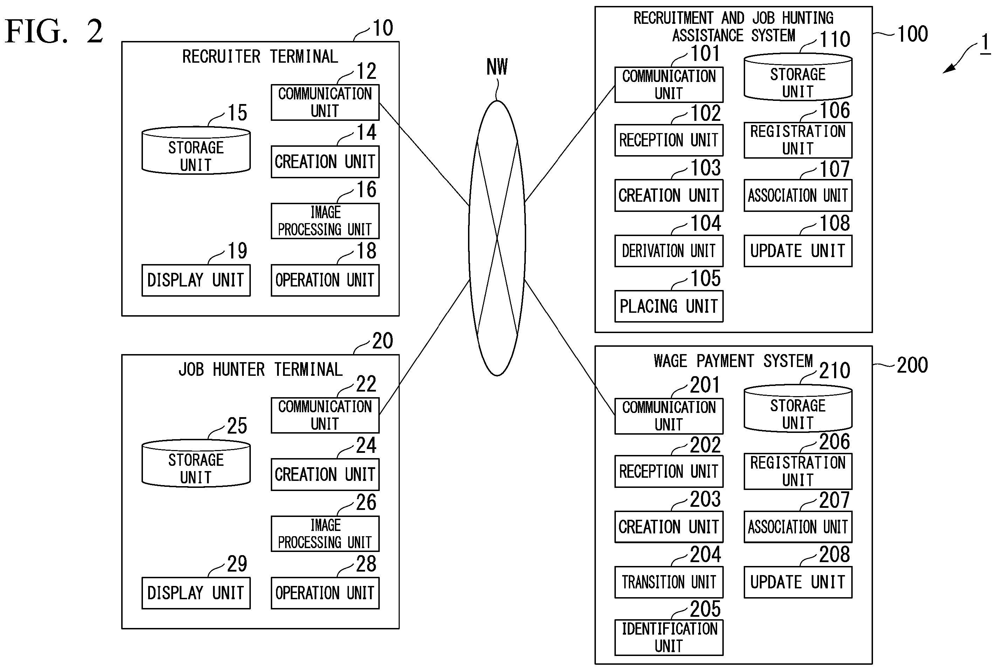

The recruiter terminal 10, the job hunter terminal 20, the recruitment and job hunting assistance system 100, and the wage payment system 200 included in the assistance system 1 will be described below in detail. FIG. 2 is a block diagram illustrating an example of the recruiter terminal 10, the job hunter terminal 20, the recruitment and job hunting assistance system 100, and the wage payment system 200 included in the assistance system 1 according to the present embodiment. A process associated with placing of a recruitment advertisement, a process of paying a fee to a person who provides the recruitment and job hunting assistance service on the basis of placing of the recruitment advertisement, a process of creating an employment plan of employees, and a process when an employee is retired are divisionally described with reference to FIG. 2.

The process associated with placing of a recruitment advertisement and a process of paying a fee to a person who provides a recruitment and job hunting assistance service on the basis of placing of the recruitment advertisement will be described.

### (Recruiter terminal 10)

The recruiter terminal 10 includes a communication unit 12, a creation unit 14, an image processing unit 16, an operation unit 18, a display unit 19, and a storage unit 15. The communication unit 12 is realized by a communication module. The communication unit 12 communicates with an external communication device via a network NW. The communication unit 12 communicates, for example, using a communication system such as wired LAN. The communication unit 12 may communicate, for example, using a wireless communication system such as wireless LAN, Bluetooth (registered trademark), or long term evolution (LTE, registered trademark). The communication unit 12 holds communication information required for communication with the recruitment and job hunting assistance system 100 and the wage payment system 200 via the network NW.

The display unit 19 is, for example, a display and includes a touch panel. The storage unit 15 is realized by a hard disk drive (HDD), a flash memory, a random access memory (RAM), a read only memory (ROM), or the like and stores information. The storage unit 15 may be realized in cloud.

The operation unit 18 is an input device that receives an operation of a recruiter EM and is, for example, a touch panel. When a recruiter EM performs an operation of accessing a web site of a recruitment and job hunting assistance service on the operation unit 18, a log-in process on the web site of the recruitment and job hunting assistance service is performed.

The log-in process will be described. When a recruiter EM has performed an operation of accessing a web site of a recruitment and job hunting assistance service, the operation unit 18 receives the operation. The creation unit 14 creates an access request for the web site of the recruitment and job hunting assistance service on the basis of the operation received by the operation unit 18 and transmits the created access request from the communication unit 12 to the recruitment and job hunting assistance system 100.

An access response transmitted by the recruitment and job hunting assistance system 100 in response to the access request is received by the communication unit 12. The image processing unit 16 acquires the access response from the communication unit 12 and causes the display unit 19 to display an initial screen (not illustrated) of the web site of the recruitment and job hunting assistance service on the basis of the acquired access response. An example of the initial screen includes a box for inputting a user ID (identification information), a box for inputting a password, a log-in button for log-in, and a cancellation button for cancellation.

When the recruiter EM has performed an operation of inputting a first recruiter ID as the user ID and a first recruiter password as the password and pressing the log-in button on the initial screen, the operation unit 18 receives the operation. The creation unit 14 creates a log-in request including the first recruiter ID and the first recruiter password on the basis of the operation received by the operation unit 18 and transmits the created log-in request from the communication unit 12 to the recruitment and job hunting assistance system 100.

Log-in screen information which is transmitted from the recruitment and job hunting assistance system 100 when log-in has succeeded in response to the log-in request is received by the communication unit 12. The image processing unit 16 acquires the log-in screen information from the communication unit 12 and causes the display unit 19 to display a log-in screen on the basis of the acquired log-in screen information. The log-in screen includes a recruitment information setting button (not illustrated) which is pressed when recruitment information is set. In this way, the log-in process in the recruiter terminal 10 ends.

When the recruiter EM performs an operation of pressing (selecting) the recruitment information setting button, a recruitment information setting process is performed. The recruitment information setting process will be described. The operation unit 18 receives the operation of pressing (selecting) the recruitment information setting button. The creation unit 14 creates a recruitment information setting request including the first recruiter ID and information indicating settings of recruitment information on the basis of the operation received by the operation unit 18 and transmits the created recruitment information setting request from the communication unit 12 to the recruitment and job hunting assistance system 100.

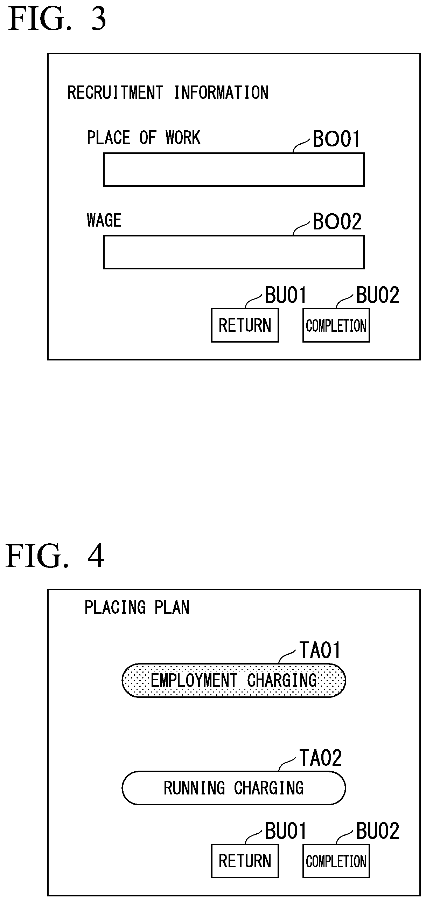

Recruitment information input screen information which is transmitted from the recruitment and job hunting assistance system 100 in response to the recruitment information setting request is received by the communication unit 12. The image processing unit 16 acquires the recruitment information input screen information from the communication unit 12 and causes the display unit 19 to display a recruitment information input screen on the basis of the acquired recruitment information input screen information. FIG. 3 is a diagram illustrating an example of a recruitment information input screen of the recruitment and job hunting assistance service. As illustrated in FIG. 3, the recruitment information input screen includes a work place input box BO01 for inputting a place of work, a wage input box BO02 for inputting a wage, a return button BU01 which is pressed for return, and a completion button BU02 which is pressed for completion.

A recruiter EM inputs a place of work to the work place input box BO01, inputs a wage to the wage input box BO02, and presses the completion button BU02 with reference to the recruitment information input screen. The operation unit 18 receives the operation of inputting a place of work and a wage. The creation unit 14 creates recruitment information including a first recruiter ID and information indicating a job category and a wage on the basis of the operation received by the operation unit 18 and transmits the created recruitment information from the communication unit 12 to the recruitment and job hunting assistance system 100. In this way, the recruitment information setting process in the recruiter terminal 10 ends.

When charging method selection screen information which is transmitted from the recruitment and job hunting assistance system 100 in response to the recruitment information is received by the communication unit 12, a charging method setting process is performed. The charging method setting process will be described. The image processing unit 16 acquires the charging method selection screen information from the communication unit 12 and causes the display unit 19 to display a charging method selection screen on the basis of the acquired charging method selection screen information.

FIG. 4 is a diagram illustrating an example of the charging method selection screen. The charging method selection screen includes an employment charging tag TA01 for selecting employment charging and a running charging tag TA02 for selecting running charging as charging methods for compensation for placing a recruitment advertisement, a return button BU01 which is pressed for return, and a completion button BU02 which is pressed for completion. Employment charging is a charging method which is used when a recruiter EM can employ a job hunter AP. In the employment charging, the recruiter EM pays a fee to a provider of the recruitment and job hunting assistance service when the job hunter AP is employed. Running charging is a charging method which is used when a recruitment advertisement is placed. In the running charging, the recruiter EM pays a fee to the provider of the recruitment and job hunting assistance service when the recruitment advertisement is placed.

When a recruiter EM performs an operation of pressing (selecting) one of the employment charging tag TA01 and the running charging tag TA02 included in the charging method selection screen, the operation unit 18 receives the operation. The image processing unit 16 displays the tag pressed on the basis of the operation received by the operation unit 18 in a color other than that of a non-pressed tag. With this configuration, it is possible to allow the recruiter EM to easily distinguish the pressed tag and the non-pressed tag. The creation unit 14 creates charging method information including a first recruiter ID and information indicating a charging method on the basis of the operation received by the operation unit 18 and transmits the created charging method information from the communication unit 12 to the recruitment and job hunting assistance system 100. In this way, the charging method setting process in the recruiter terminal 10 ends.

When payment method selection screen information transmitted from the recruitment and job hunting assistance system 100 in response to the charging method information is received by the communication unit 12, a payment method setting process is performed. For example, when the charging method information includes information indicating employment charging, the recruitment and job hunting assistance system 100 transmits the payment method selection screen information. The payment method setting process will be described. The image processing unit 16 acquires the payment method selection screen information from the communication unit 12 and causes the display unit 19 to display a payment method selection screen on the basis of the acquired payment method selection screen information.

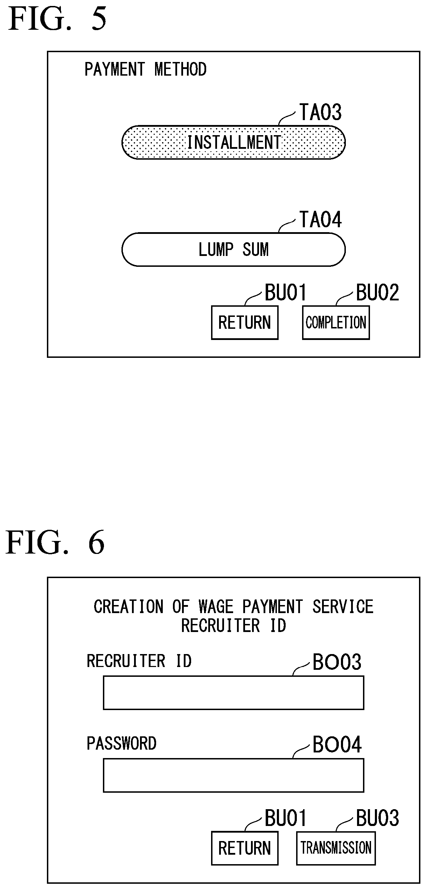

FIG. 5 is a diagram illustrating an example of the payment method selection screen. The payment method selection screen includes an installment payment tag TA03 for selecting installment payment and a lump-sum payment tag TA04 for selecting lump-sum payment as a fee payment method, a return button BU01 which is pressed for return, and a completion button BU02 which is pressed for completion. In the installment payment, a fee is paid to the provider of the recruitment and job hunting assistance service by installment payment when a recruiter EM employs a job hunter AP. In the lump-sum payment, a fee is paid to the provider of the recruitment and job hunting assistance service by lump-sum payment when a recruiter EM employs a job hunter AP.

When a recruiter EM performs an operation of pressing (selecting) one of the installment payment tag T03 and the lump-sum payment tag TA04 included in the payment method selection screen, the operation unit 18 receives the operation. The image processing unit 16 displays the tag pressed on the basis of the operation received by the operation unit 18 in a color other than that of the non-pressed tag. With this configuration, it is possible to allow the recruiter EM to easily distinguish the pressed tag and the non-pressed tag. The creation unit 14 create payment method information including the first recruiter ID and information indicating the payment method on the basis of the operation received by the operation unit 18 and transmits the created payment method information from the communication unit 12 to the recruitment and job hunting assistance system 100. In this way, the payment method setting process in the recruiter terminal 10 ends.

Log-in request screen information for requesting log-in on a wage payment service which is transmitted by the recruitment and job hunting assistance system 100 in response to the payment method information is received by the communication unit 12. The image processing unit 16 acquires the log-in request screen information from the communication unit 12 and causes the display unit 19 to display a log-in request screen (not illustrated) on the basis of the acquired log-in request screen information. The log-in request screen includes information for requesting log-in on the wage payment service.

Wage payment service recruiter ID creation screen information for creating a second recruiter ID for log-in on the wage payment service which is transmitted from the recruitment and job hunting assistance system 100 in response to the payment method information is received by the communication unit 12. The image processing unit 16 acquires the wage payment service recruiter ID creation screen information from the communication unit 12 and causes the display unit 19 to display a wage payment service recruiter ID creation screen on the basis of the acquired wage payment service recruiter ID creation screen information. The wage payment service recruiter ID creation screen includes information for creating the second recruiter ID for using the wage payment service.

FIG. 6 is a diagram illustrating an example of the wage payment service recruiter ID creation screen. The wage payment service recruiter ID creation screen includes a recruiter ID input box BO03 for inputting a second recruiter ID, a password input box BO04 for inputting a second recruiter password, a return button BU01 which is pressed for return, and a transmission button BU03 which is pressed for transmission.

A recruiter EM performs an operation of inputting a second recruiter ID to the recruiter ID input box BO03 included in the wage payment service recruiter ID creation screen, inputting a second recruiter password to the password input box BO04, and pressing a transmission button BU01. The operation unit 18 receives the operation. The creation unit 14 creates wage payment service recruiter log-in information including the second recruiter ID and the second recruiter password on the basis of the operation received by the operation unit 18 and transmits the created wage payment service recruiter log-in information from the communication unit 12 to the wage payment system 200.

When a recruiter EM performs an operation of accessing the web site of the wage payment service on the operation unit 18, a log-in process on the web site of the wage payment service is performed.

The log-in process on a web site of the wage payment service will be described. When a recruiter EM performs an operation of accessing the web site of the wage payment service, the operation unit 18 receives the operation. The creation unit 14 creates an access request for the web site of the wage payment service on the basis of the operation received by the operation unit 18 and transmits the created access request from the communication unit 12 to the wage payment system 200.

An access response which is transmitted from the wage payment system 100 in response to the access request is received by the communication unit 12. The image processing unit 16 acquires the access response from the communication unit 12 and causes the display unit 19 to display an initial screen (not illustrated) of the web site of the wage payment service on the basis of the acquired access response. An example of the initial screen includes a box for inputting a user ID, a box for inputting a password, a log-in button for log-in, and a cancellation button for cancellation.

When a recruiter EM performs an operation of inputting a second recruiter ID as the user ID and a second recruiter password as the password on the initial screen and pressing the log-in button, the operation unit 18 receives the operation. The creation unit 14 creates a log-in request including the second recruiter ID and the second recruiter password on the basis of the operation received by the operation unit 18 and transmits the created log-in request from the communication unit 12 to the wage payment system 200.

Log-in screen information which is transmitted from the wage payment system 200 when log-in based on the log-in request has succeeded is received by the communication unit 12. The image processing unit 16 acquires the log-in screen information from the communication unit 12 and causes the display unit 19 to display a log-in screen on the basis of the acquired log-in screen information. The log-in screen includes a wage payment setting button (not illustrated) which is pressed when a wage payment is set. In this way, the log-in process in the recruiter terminal 10 ends.

The creation unit 14 creates a log-in completion notification including a user ID and information indicating that log-in has been completed and transmits the created log-in completion notification to the recruitment and job hunting assistance system 100.

An association process between the recruitment and job hunting assistance system 100 and the wage payment system 200 is performed. When a recruiter EM performs an operation of accessing the recruitment and job hunting assistance service on the operation unit 18, a log-in process on the wage payment service and the wage payment service is performed. That is, the first recruiter IDs and the second recruiter IDs are associated.

The recruiter EM performs screening and employment with reference to a medium management screen (not illustrated) which is provided by the recruitment and job hunting assistance service. The medium management screen includes job hunter information of a job hunter AP having applied to a company of which running is requested by the recruiter EM. A case in which the recruiter EM determines that a job hunter AP is employed as an employee will be described. The recruiter EM performs an operation of registering the job hunter AP as an employee. For example, the recruiter EM presses (selects) a registration button (not illustrated) associated with the job hunter AP to be employed out of one or more job hunters AP in the medium management screen. Accordingly, an employee registering process is performed. The employee registering process will be described. The operation unit 18 receives an operation of pressing (selecting) the registration button (not illustrated) included in the medium management screen. The creation unit 14 creates an employee ID of the job hunter AP to be employed on the basis of the operation received by the operation unit 18 and correlates the employee ID with the first recruiter ID. The creation unit 14 creates an employee registration request including information indicating that the job hunter AP is registered as an employee and transmits the created employee registration request from the communication unit 12 to the wage payment system 200.

Employee registration screen information which is transmitted from the wage payment system 200 in response to the employee registration request is received by the communication unit 12. The image processing unit 16 acquires the employee registration screen information from the communication unit 12 and causes the display unit 19 to display an employee registration screen (not illustrated) on the basis of the acquired employee registration screen information. The employee registration screen includes boxes for inputting a recruiter ID, a job hunter ID, and an employee ID.

With reference to the employee registration screen, the recruiter EM inputs the first recruiter ID to the box for inputting a recruiter ID, inputs a first job hunter ID to the box for inputting a job hunter ID, and inputs an employee ID to the box for inputting an employee ID. The operation unit 18 receives the operation. The creation unit 14 creates employee information including the first recruiter ID, the first job hunter ID, and the employee ID received by the operation unit 18 and transmit the created employee information from the communication unit 12 to the wage payment system 200.

An employee registration notification which is transmitted by the wage payment system 200 in response to the employee information is received by the communication unit 12. The image processing unit 16 acquires the employee registration notification from the communication unit 12 and causes the display unit 19 to display completion of registration of the employee on the basis of the acquired employee registration notification. In this way, the employee registration process in the recruiter terminal 10 ends.

The recruiter EM inputs information indicating payment of a wage. The operation unit 18 receives an operation of inputting the information indicating payment of a wage. The creation unit 14 creates wage payment information including a plurality of employee IDs and the information indicating payment of wages in which an amount of wage is correlated with each of the plurality of employee IDs on the basis of the information indicating payment of a wage received by the operation unit 18 and transmits the created wage payment information from the communication unit 12 to the wage payment system 200.

Demand notification information which is transmitted from the recruitment and job hunting assistance system 100 in response to the wage payment information is received by the communication unit 12. The image processing unit 16 acquires the demand notification information from the communication unit 12 and causes the display unit 19 to display information indicating an amount of money requested on the basis of the acquired demand notification information.

The recruiter EM executes payment and inputs information for notifying that payment has been executed. The operation unit 18 receives an operation of inputting the information for notifying that payment has been executed. The creation unit 14 creates a payment completion notification including the first recruiter ID and the information for notifying that payment has been executed on the basis of the operation received by the operation unit 18 and transmits the created payment completion notification from the communication unit 12 to the recruitment and job hunting assistance system 100.

The creation unit 14, the image processing unit 16, and the operation unit 18 are realized, for example, by causing a hardware processor such as a central processing unit (CPU) to execute a computer program (software) stored in the storage unit 15.

Some or all of these functional units may be realized by hardware (a circuit part including circuitry) such as a large scale integration (LSI) circuit, an application-specific integrated circuit (ASIC), a field-programmable gate array (FPGA), or a graphics processing unit (GPU) or may be cooperatively realized by software and hardware.

The computer program may be stored in a storage device such as an HDD or a flash memory in advance or may be stored in a removable storage medium such as a digital versatile disc (DVD) or a CD-ROM and installed by setting the storage medium into a drive device.

### (Job hunter terminal 20)

The job hunter terminal 20 includes a communication unit 22, a creation unit 24, an image processing unit 26, an operation unit 28, a display unit 29, and a storage unit 25. The communication unit 22 is realized by a communication module. The communication unit 22 communicates with an external communication device via a network NW. The communication unit 22 communicates, for example, using a communication system such as wired LAN. The communication unit 22 may communicate, for example, using a wireless communication system such as wireless LAN, Bluetooth (registered trademark), or LTE (registered trademark). The communication unit 22 holds communication information required for communication with the recruitment and job hunting assistance system 100 and the wage payment system 200 via the network NW.

The display unit 29 is, for example, a display and includes a touch panel. The storage unit 25 is realized by an HDD, a flash memory, a RAM, a ROM, or the like and stores information. The storage unit 15 may be realized in cloud. The operation unit 28 is an input device that receives an operation from a job hunter AP and is, for example, a touch panel.

When a job hunter AP has performed an operation of accessing a web site of a recruitment and job hunting assistance service on the operation unit 28, a log-in process on the web site of the recruitment and job hunting assistance service is performed. The log-in process between the recruiter terminal 10 and the recruitment and job hunting assistance system 100 can be applied as the log-in process. Here, they are different in that a job hunter AP inputs a first job hunter ID as the user ID and a first job hunter password as the password on the initial screen.

Log-in screen information which is transmitted from the recruitment and job hunting assistance system 100 when log-in has succeeded is received by the communication unit 22. The image processing unit 26 acquires the log-in screen information from the communication unit 22 and causes the display unit 29 to display a log-in screen on the basis of the acquired log-in screen information. The log-in screen includes a recruitment information view button (not illustrated) which is pressed when recruitment information is viewed.

When a job hunter AP performs an operation of pressing (selecting) the recruitment information view button, an application process is performed. The application process will be described below. The operation unit 28 receives the operation of pressing (selecting) the recruitment information view button. The creation unit 24 creates a recruitment information view request including the first job hunter ID and information indicating that recruitment information is viewed on the basis of the operation received by the operation unit 28 and transmits the created recruitment information view request from the communication unit 12 to the recruitment and job hunting assistance system 100.

Recruitment screen information which is transmitted from the recruitment and job hunting assistance system 100 in response to the recruitment information view request is received by the communication unit 22. The image processing unit 26 acquires the recruitment screen information from the communication unit 22 and causes the display unit 19 to display a recruitment screen (not illustrated) on the basis of the acquired recruitment screen information. An example of the recruitment screen includes a recruitment information list in which one or more recruiting company names are correlated with a recruitment ID, information indicating a place of work, information indicating a wage, and an application button for each recruiting company name.

When a job hunter AP has input applicant information on the recruitment screen and has performed an operation of pressing (selecting) the application button correlated with the recruiting company name to apply for from the recruitment information list, the operation unit 28 receives the operation. The creation unit 24 creates application information including a first recruiter ID, a first job hunter ID, and applicant information correlated with the application button pressed on the basis of the operation received by the operation unit 28 and transmits the created application information from the communication unit 22 to the recruitment and job hunting assistance system 100.

When employment of the job hunter AP is determined, the wage payment system 200 transmits a registration request notification to the job hunter terminal 20. For example, the wage payment system 200 notifies the job hunter terminal 20 of a uniform resource locator (URL) of a wage payment service by an electronic mail. The registration request notification transmitted from the wage payment system 200 is received by the communication unit 22. The image processing unit 26 acquires the registration request notification from the communication unit 22 and causes the display unit 29 to display information (not illustrated) for requesting registration on the basis of the acquired registration request notification. When the job hunter AP performs an operation of accessing a web site of the wage payment service using the operation unit 28, a log-in process on the web site of the wage payment service is performed. The log-in process between the recruiter terminal 10 and the recruitment and job hunting assistance system 100 can be applied as the log-in process. Here, they are different in that the job hunter AP inputs a second job hunter ID as the user ID and a second job hunter password as the password on the initial screen.

Log-in screen information which is transmitted from the wage payment system 200 when log-in has succeeded is received by the communication unit 22. The image processing unit 26 acquires the log-in screen information from the communication unit 22 and causes the display unit 29 to display a log-in screen on the basis of the acquired log-in screen information. The log-in screen includes an employee registration button (not illustrated) which is pressed when an employee is registered.

When the job hunter AP performs an operation of pressing (selecting) the employee registration button, an employee registering process is performed. The remployee registering process will be described. The operation unit 28 receives the operation of pressing the employee registration button. The creation unit 24 creates an employee registration request on the basis of the operation of pressing the employee registration button received by the operation unit 28 and transmits the created employee registration request from the communication unit 22 to the wage payment system 200.

Employee registration screen information which is transmitted from the wage payment system 200 in response to the employee registration request is received by the communication unit 22. The image processing unit 26 acquires the employee registration screen information from the communication unit 22 and causes the display unit 29 to display an employee registration screen on the basis of the acquired employee registration screen information. The employee registration screen includes information for requesting registration of the second job hunter ID and employee information.

The job hunter AP inputs employee information with reference to the employee registration screen. An example of the employee information is account information for transferring a wage. The operation unit 28 receives the operation of inputting employee information. The creation unit 24 creates employee registration information including the second job hunter ID and the employee information on the basis of the employee information received by the operation unit 28 and transmits the created employee registration information from the communication unit 22 to the wage payment system 200. In this way, the employee registering process in the job hunter terminal 20 ends.

The creation unit 24, the image processing unit 26, and the operation unit 28 are realized, for example, by causing a hardware processor such as a CPU to execute a computer program (software) stored in the storage unit 25. Some or all of these functional units may be realized by hardware (a circuit part including circuitry) such as an LSI circuit, an ASIC, an FPGA, or a GPU or may be cooperatively realized by software and hardware. The computer program may be stored in a storage device such as an HDD or a flash memory in advance or may be stored in a removable storage medium such as a DVD or a CD-ROM and installed by setting the storage medium into a drive device.

### (Recruitment and job hunting assistance system 100)

The recruitment and job hunting assistance system 100 includes a communication unit 101, a reception unit 102, a creation unit 103, a derivation unit 104, a placing unit 105, a registration unit 106, an association unit 107, an update unit 108, and a storage unit 110. The communication unit 101 is realized by a communication module. The communication unit 101 communicates with an external communication device via a network NW. The communication unit 101 communicates, for example, using a communication system such as wired LAN. The communication unit 101 may communicate, for example, using a wireless communication system such as wireless LAN, Bluetooth (registered trademark), or LTE (registered trademark). The communication unit 101 holds communication information required for communication with the recruiter terminal 10, the job hunter terminal 20, and the wage payment system 200 via the network NW.

The storage unit 110 is realized by an HDD, a flash memory, a RAM, a ROM, or the like and stores information. The storage unit 110 stores recruiter log-in information in which one or more first recruiter IDs are correlated with a first recruiter password for allowing a recruiter EM corresponding to each of the one or more first recruiter IDs to log-in on a site of the recruitment and job hunting assistance service. The storage unit 110 stores job hunter log-in information in which one or more first job hunter IDs are correlated with a first job hunter password for allowing a job hunter AP corresponding to each of the one or more first job hunter IDs to log-in on the site of the recruitment and job hunting assistance service. The storage unit 110 stores recruitment advertisement placement information in which one or more first recruiter IDs are correlated with a job category, information indicating a wage, and a charging method, a payment method, and payment result information for placement of a recruitment advertisement in a recruitment medium for each of the one or more first recruiter IDs. The payment method when the charging method is charging for employment is stored in the recruitment advertisement placement information. The storage unit 110 stores job hunter application information in which one or more first recruiter IDs are correlated with the first job hunter ID and the applicant information for each of the one or more first recruiter IDs. The storage unit 110 stores demand management information in which one or more second job hunter IDs employed through the recruitment advertisement placed by charging for employment are correlated with information indicating a wage paid to a job hunter corresponding to each of the one or more second job hunter IDs.

When the communication unit 101 receives an access request transmitted from the recruiter terminal 10, a log-in process in cooperation with the recruiter terminal 10 is performed. The log-in process will be described. The reception unit 102 acquires the access request from the communication unit 101 and receives the acquired access request. The creation unit 103 acquires the access request from the reception unit 102 and creates an access response for causing the recruiter terminal 10 to display an initial screen on the basis of the acquired access request. The creation unit 103 transmits the created access response from the communication unit 101 to the recruiter terminal 10.

The communication unit 101 receives a log-in request transmitted from the recruiter terminal 10. The reception unit 102 acquires the log-in request from the communication unit 101 and receives the acquired log-in request. The creation unit 103 acquires the log-in process request from the reception unit 102 and acquires a first recruiter ID and a first recruiter password included in the acquired log-in request. The creation unit 103 determines whether a combination of the acquired first recruiter ID and the acquired first recruiter password is included in recruiter log-in information of the storage unit 110.

When it is determined that the combination of the first recruiter ID and the first recruiter password is included in the recruiter log-in information of the storage unit 110, the creation unit 103 creates log-in screen information for causing the recruiter terminal 10 to display a log-in screen. The creation unit 103 transmits the created log-in screen information from the communication unit 101 to the recruiter terminal 10. When it is determined that the combination of the first recruiter ID and the first recruiter password is not included in the recruiter log-in information of the storage unit 110, the creation unit 103 creates screen information for causing the recruiter terminal 10 to display that log-in has failed. The creation unit 103 transmits the created screen information from the communication unit 101 to the recruiter terminal 10. In this way, the log-in process in the recruitment and job hunting assistance system 100 ends.

When the communication unit 101 receives a recruitment information setting request transmitted from the recruiter terminal 10, a recruitment information setting process is performed. The recruitment information setting process will be described. The reception unit 102 acquires the recruitment information setting request from the communication unit 101 and receives the acquired recruitment information setting request. The creation unit 103 acquires the recruitment information setting request received by the reception unit 102 and creates recruitment information input screen information for causing the recruiter terminal 10 to display the recruitment information input screen (FIG. 3) on the basis of the acquired recruitment information setting request. The creation unit 103 transmits the created recruitment information input screen information from the communication unit 101 to the recruiter terminal 10.

The communication unit 101 receives recruitment information transmitted from the recruiter terminal 10. The reception unit 102 acquires the recruitment information from the communication unit 101 and receives the acquired recruitment information. The registration unit 106 acquires the first recruiter ID, the job category, and information indicating a wage included in the recruitment information from the reception unit 102 and stores (registers) the acquired information in recruitment advertisement placement information of the storage unit 110 in correlation. In this way, the recruitment information setting process in the recruitment and job hunting assistance system 100 ends.

When the creation unit 103 creates charging method selection screen information for causing the recruiter terminal 10 to display the charging method selection screen (FIG. 4), a charging method setting process is performed. The charging method setting process will be described. The creation unit 103 transmits the created charging method selection screen information from the communication unit 101 to the recruiter terminal 10.

The communication unit 101 receives the charging method selection information transmitted from the recruiter terminal 10. The reception unit 102 acquires the charging method selection information from the communication unit 101 and receives the acquired charging method selection information. The registration unit 106 acquires a first recruiter ID and information indicating the charging method included in the charging method selection information from the reception unit 102 and stores (registers) the acquired information in the recruitment advertisement placement information of the storage unit 110 in correlation. In this way, the charging method setting process in the recruitment and job hunting assistance system 100 ends.

When the creation unit 103 creates payment method selection screen information for causing the recruiter terminal 10 to display the payment method selection screen (FIG. 5), a payment method setting process is performed. The charging method setting process will be described. The creation unit 103 transmits the created payment method selection screen information from the communication unit 101 to the recruiter terminal 10.

The communication unit 101 receives the payment method information transmitted from the recruiter terminal 10. The reception unit 102 acquires the payment method information from the communication unit 101 and receives the acquired payment method information. The registration unit 106 acquires the first recruiter ID and information indicating the payment method included in the payment method information from the reception unit 102 and stores (registers) the acquired information in the recruitment advertisement placement information of the storage unit 110 in correlation. In this way, the payment method setting process in the recruitment and job hunting assistance system 100 ends.

The creation unit 103 creates log-in request screen information for causing the recruiter terminal 10 to display a log-in request screen in the wage payment service. The creation unit 103 transmits the created log-in request screen information in the wage payment service from the communication unit 101 to the recruiter terminal 10.

The creation unit 103 creates wage payment service recruiter ID creation screen information for creating a recruiter ID in the wage payment service. The creation unit 103 transmits the created wage payment service recruiter ID creation screen information from the communication unit 101 to the recruiter terminal 10.

A log-in completion notification in the wage payment service which is transmitted from the recruiter terminal 10 in response to the wage payment service recruiter ID creation screen information is received by the communication unit 102. The association unit 107 acquires the log-in completion notification in the wage payment service from the communication unit 12 and synchronizes (associates) the first recruiter ID between the recruitment and job hunting assistance service provided by the recruitment and job hunting assistance system 100 and the wage payment service provided by the wage payment system 200 on the acquired log-in completion notification. Accordingly, the recruitment and job hunting assistance service and the wage payment service can be used with the first recruiter ID. That is, the first recruiter ID and the second recruiter ID are correlated.

The placing unit 105 acquires information indicating the job category and the wage correlated with the first recruiter ID synchronized by the association unit 107 from the recruitment advertisement placement information and places a recruitment advertisement including the acquired information indicating the job category and the wage in the recruitment and job hunting assistance service.

When the communication unit 101 receives an access request transmitted from the job hunter terminal 20, a log-in process is performed. The log-in process between the recruiter terminal 10 and the recruitment and job hunting assistance system 100 can be applied as the log-in process. Here, the creation unit 103 acquires a second job hunter ID and a second job hunter password included in the log-in request and determines whether a combination of the acquired second job hunter ID and the acquired second job hunter password is included in the job hunter log-in information of the storage unit 110.

When it is determined that the combination of the second job hunter ID and the second job hunter password is included in the job hunter log-in information of the storage unit 110, the creation unit 103 creates log-in screen information for causing the job hunter terminal 20 to display a log-in screen. The creation unit 103 transmits the created log-in screen information from the communication unit 101 to the job hunter terminal 20. When it is determined that the combination of the second job hunter ID and the second job hunter password is not included in the job hunter log-in information of the storage unit 110, the creation unit 103 creates screen information for causing the job hunter terminal 20 to display that log-in has failed. The creation unit 103 transmits the created screen information from the communication unit 101 to the job hunter terminal 20.

A recruitment information view request which is transmitted from the job hunter terminal 20 in response to the log-in screen information is received by the communication unit 101. An application process will be described. The creation unit 103 creates recruitment screen information for causing the job hunter terminal 20 to display a recruitment screen. The creation unit 103 transmits the created recruitment screen information from the communication unit 101 to the job hunter terminal 20.

Application information which is transmitted from the job hunter terminal 20 in response to the recruitment screen information is received by the communication unit 101. The setting unit 104 acquires application information from the communication unit 101 and stores a first recruiter ID and a first job hunter ID included in the acquired application information in correlation with the applicant information in the job hunter application information of the storage unit 110. In this way, the application process in the recruitment and job hunting assistance system 100 ends.

The communication unit 101 receives employed employee information transmitted from the wage payment system 200. The reception unit 102 acquires and receives the employed employee information from the communication unit 101. The registration unit 106 acquires the employed employee information from the reception unit 102 and registers one or more second job hunter IDs employed through the recruitment advertisement placed by charging for employment included in the employed employee information and information indicating an amount of wage paid to a job hunter corresponding to each of the one or more second job hunter IDs in the demand management information of the storage unit 110. Accordingly, the provider of the recruitment and job hunting assistance service can see a demand destination of a fee. The derivation unit 104 acquires the employed employee information from the reception unit 102 and acquires information indicating one or more second job hunter IDs employed through the recruitment advertisement placed by charging for employment included in the acquired employed employee information and information indicating an amount of wage paid to a job hunter corresponding to each of the one or more second job hunter IDs. The derivation unit 104 derives the amount of money requested on the basis of the acquired information indicating the amount of wage paid to the job hunter corresponding to each of the one or more second job hunter IDs. For example, the derivation unit 104 sets an amount of money obtained by multiplying a wage by a predetermined proportion as the amount of money requested on the basis of the information indicating the wage (a monthly salary). Specifically, when the monthly income is 500,000 yen and the predetermined proportion is 30%, the amount of money demanded is 150,000 yen.

The creation unit 103 acquires the information indicating the amount of money requested derived for each of the one or more second job hunter IDs by the derivation unit 104 and creates demand notification information for notifying the recruiter EM of the amount of money requested on the basis of the acquired information indicating the amount of money requested. The creation unit 103 transmits the created demand notification information from the communication unit 101 to the recruiter terminal 10.

A payment completion notification transmitted from the recruiter terminal 10 in response to the demand notification information is received by the communication unit 101. The reception unit 102 acquires the payment completion notification from the communication unit and receives the acquired payment completion notification. The registration unit 106 acquires the payment completion notification from the reception unit 102 and stores the acquired payment completion notification in the payment result information of the recruitment advertisement placement information.

The reception unit 102, the creation unit 103, the derivation unit 104, the placing unit 105, the registration unit 106, the association unit 1076, and the update unit 108 are realized, for example, by causing a hardware processor such as a CPU to execute a computer program (software) stored in the storage unit 25. Some or all of these functional units may be realized by hardware (a circuit part including circuitry) such as an LSI circuit, an ASIC, an FPGA, or a GPU or may be cooperatively realized by software and hardware. The computer program may be stored in a storage device such as an HDD or a flash memory in advance or may be stored in a removable storage medium such as a DVD or a CD-ROM and installed by setting the storage medium into a drive device.

### (Wage payment system 200)

The wage payment system 200 includes a communication unit 201, a reception unit 202, a creation unit 203, a transition unit 204, an identification unit 205, a registration unit 206, an association unit 207, an update unit 208, and a storage unit 210. The communication unit 201 is realized by a communication module. The communication unit 201 communicates with an external communication device via a network NW. The communication unit 201 communicates, for example, using a communication system such as wired LAN. The communication unit 201 may communicate, for example, using a wireless communication system such as wireless LAN, Bluetooth (registered trademark), or LTE (registered trademark). The communication unit 201 holds communication information required for communication with the recruiter terminal 10, the job hunter terminal 20, and the recruitment and job hunting assistance system 100 via the network NW.

The storage unit 210 is realized by an HDD, a flash memory, a RAM, a ROM, or the like and stores information. The storage unit 210 stores recruiter log-in information in which one or more second recruiter IDs are correlated with a second recruiter password for allowing a recruiter EM corresponding to each of the one or more second recruiter IDs to log-in on a site of the wage payment service. The storage unit 210 stores job hunter log-in information in which one or more second job hunter IDs are correlated with a second job hunter password for allowing a job hunter AP corresponding to each of the one or more second job hunter IDs to log-in on the site of the wage payment service. The storage unit 210 stores first employee information in which one or more first recruiter IDs are correlated with employee IDs of a company for which a recruiter corresponding to the first recruiter ID has placed a recruitment advertisement and the first job hunter IDs corresponding to the employee IDs for each of the one or more first recruiter IDs. The storage unit 210 stores one or more second recruiters IDs and second employee information in which the one or more second recruiter IDs are correlated with one or more employee IDs of a company for which a recruiter corresponding to the second recruiter ID has placed a recruitment advertisement and the second job hunter IDs when there are employee information and the corresponding one for each of the one or more employee IDs for each of the kone or more second recruiter IDs. The storage unit 210 stores wage information in which an employee ID and information indicating an amount of wage are correlated.

The communication unit 201 receives wage payment service recruiter ID information transmitted from the recruiter terminal 10. The reception unit 202 acquires the wage payment service recruiter ID information from the communication unit 201 and receives the acquired wage payment service recruiter ID information. The registration unit 206 acquires the wage payment service recruiter ID information from the reception unit 102, acquires a second recruiter ID and a second recruiter password included in the acquired wage payment service recruiter ID information, and stores (registers) the acquired information in the recruiter log-in information of the storage unit 110 in correlation.

When the communication unit 201 receives a log-in request transmitted from the recruiter terminal 10, a log-in process is performed. The log-in process between the recruiter terminal 10 and the recruitment and job hunting assistance system 100 can be applied as the log-in process. Here, the creation unit 203 acquires a second recruiter ID and a second recruiter password which are included in the log-in request and determines whether a combination of the acquired second recruiter ID and the acquired second recruiter password is included in the recruiter log-in information of the storage unit 210.

When it is determined that the combination of the second recruiter ID and the second recruiter password is included in the recruiter log-in information of the storage unit 210, the creation unit 203 creates log-in screen information for causing the recruiter terminal 10 to display a log-in screen. The creation unit 203 transmits the created log-in screen information from the communication unit 201 to the recruiter terminal 10. When it is determined that the combination of the second recruiter ID and the second recruiter password is not included in the recruiter log-in information of the storage unit 210, the creation unit 203 creates screen information for causing the recruiter terminal 10 to display that log-in has failed. The creation unit 203 transmits the created screen information from the communication unit 201 to the recruiter terminal 10. In this way, the log-in process in the wage payment system 200 ends.

The association unit 207 synchronizes (associates) the first recruiter IDs between the recruitment and job hunting assistance service provided by the recruitment and job hunting assistance system 100 and the wage payment service provided by the wage payment system 200. With this configuration, the recruitment and job hunting assistance service and the wage payment service can be used with the first recruiter IDs. That is, the first recruiter IDs and the second recruiter IDs are correlated.

When the communication unit 201 receives an employee registration request transmitted from the recruiter terminal 10, an employee registering process is performed. The employee registering process will be described. The reception unit 202 acquires and receives the employee registration request from the communication unit 201. The registration unit 206 acquires the employee registration request from the reception unit 202 and registers the first recruiter ID, the employee ID, and the first job hunter ID which are included in the acquired employee information in the first employee information of the storage unit 210 in correlation. The creation unit 203 acquires the employee registration request from the reception unit 202 and creates employee registration screen information for causing the recruiter terminal 10 to display an employee registration screen on the basis of the acquired employee registration request. The creation unit 203 transmits the created employee registration screen information from the communication unit 201 to the recruiter terminal 10.

Employee information which is transmitted from the recruiter terminal 10 in response to the employee registration screen information is received by the communication unit 201. The reception unit 202 acquires and receives the employee information from the communication unit 201. The registration unit 206 acquires the employee information from the reception unit 202 and stores the second recruiter ID, the first job hunter ID, and the employee ID which are included in the acquired employee information in the second employee information of the storage unit 210 in correlation. In this way, the employee registering process in the wage payment system 200 ends.

The creation unit 203 creates a registration request and transmits the created registration request from the communication unit 201 to the job hunter terminal 20.

When the communication unit 201 receives a log-in request transmitted from the job hunter terminal 20 in response to the registration request, a log-in process is performed. The log-in process between the recruiter terminal 10 and the recruitment and job hunting assistance system 100 can be applied as the log-in process. Here, the creation unit 203 acquires a second job hunter ID and a second job hunter password which are included in the log-in request. The creation unit 203 determines whether a combination of the acquired second job hunter ID and the acquired second job hunter password is included in the job hunter log-in information of the storage unit 210.

When it is determined that the combination of the second job hunter ID and the second job hunter password is included in the job hunter log-in information of the storage unit 210, the creation unit 203 creates log-in screen information for causing the job hunter terminal 20 to display a log-in screen. The creation unit 203 transmits the created log-in screen information from the communication unit 201 to the job hunter terminal 20. When it is determined that the combination of the second job hunter ID and the second job hunter password is not included in the job hunter log-in information of the storage unit 210, the creation unit 203 creates screen information for causing the job hunter terminal 20 to display that log-in has failed. The creation unit 203 transmits the created screen information from the communication unit 201 to the job hunter terminal 20.

When the creation unit 203 creates employee registration screen information for causing the job hunter terminal 20 to display an employee registration screen, an employee registering process is performed. The employee registering process will be described. The creation unit 103 transmits the created employee registration screen from the communication unit 201 to the job hunter terminal 20.

Employee registration information transmitted from the job hunter terminal 20 in response to the employee registration screen information is received by the communication unit 201. The registration unit 206 acquires the employee registration information from the communication unit 201 and acquires the second job hunter ID and the employee information which are included in the acquired employee registration information. The registration unit 206 registers (stores) the acquired second job hunter ID and the acquired employee information in the employee information of the storage unit 210 in correlation. In this way, the employee registering process in the wage payment system 200 ends.

The creation unit 203 creates employee registration notification information for notifying the recruiter EM that the employee has been registered. The creation unit 203 transmits the created employee registration notification from the communication unit 201 to the recruiter terminal 10.

The communication unit 201 receives wage payment information transmitted from the recruiter terminal 10. The reception unit 202 acquires the wage payment information from the communication unit 201 and receives the acquired wage payment information. The registration unit 206 acquires the wage payment information from the reception unit 202 and registers the employee ID and the amount of wage which are included in the wage payment information in the wage information of the storage unit 210.

The wage payment system 200 performs payment of a wage. The identification unit 205 identifies an employee ID of each of one or more employees who have been employed through a recruitment advertisement placed by charging for employment out of one or more employee IDs to which a wage is to be paid. For example, the identification unit 205 acquires a first recruiter ID correlated with each of the one or more employee IDs from the second employee information of the storage unit 210. The identification unit 205 acquires one or more first recruiter IDs correlated with the second recruiter ID out of the acquired one or more first recruiter IDs from the second employee information. The identification unit 205 acquires a charging method for placement of a recruitment advertisement correlated with the acquired one or more first recruiter IDs in an recruitment medium from the recruitment advertisement placement information of the storage unit 110 of the recruitment and job hunting assistance system 100 associated therewith. The identification unit 205 acquires one or more first recruiter IDs in which the acquired charging method is charging for employment out of the one or more first recruiter IDs.

The identification unit 205 identifies a second job hunter ID corresponding to each of the acquired one or more first recruiter IDs. The identification unit 205 identifies one or more second job hunter IDs other than the identified one or more second job hunter IDs out of one or more second job hunter IDs included in the demand management information of the storage unit 110 of the recruitment and job hunting assistance system 100. The identification unit 205 identifies an employee ID of each of one or more employees who have been employed through a recruitment advertisement placed by charging for employment by acquiring the employee IDs correlated with the identified one or more second job hunter IDs from the second employee information.

The creation unit 203 acquires the employee ID of each of one or more employees who have been employed through the recruitment advertisement placed by charging for employment from the identification unit 205. The creation unit 203 creates employed employee information including the acquired one or more employee IDs and information indicating an amount of wage paid and transmits the created employed employee information from the communication unit 201 to the recruitment and job hunting assistance system 100.

The reception unit 202, the creation unit 203, the transition unit 204, the identification unit 205, the registration unit 206, the association unit 207, and the update unit 208 are realized, for example, by causing a hardware processor such as a CPU to execute a computer program (software) stored in the storage unit 25. Some or all of these functional units may be realized by hardware (a circuit part including circuitry) such as an LSI circuit, an ASIC, an FPGA, or a GPU or may be cooperatively realized by software and hardware. The computer program may be stored in a storage device such as an HDD or a flash memory in advance or may be stored in a removable storage medium such as a DVD or a CD-ROM and installed by setting the storage medium into a drive device.

### (Operations of assistance system 1)

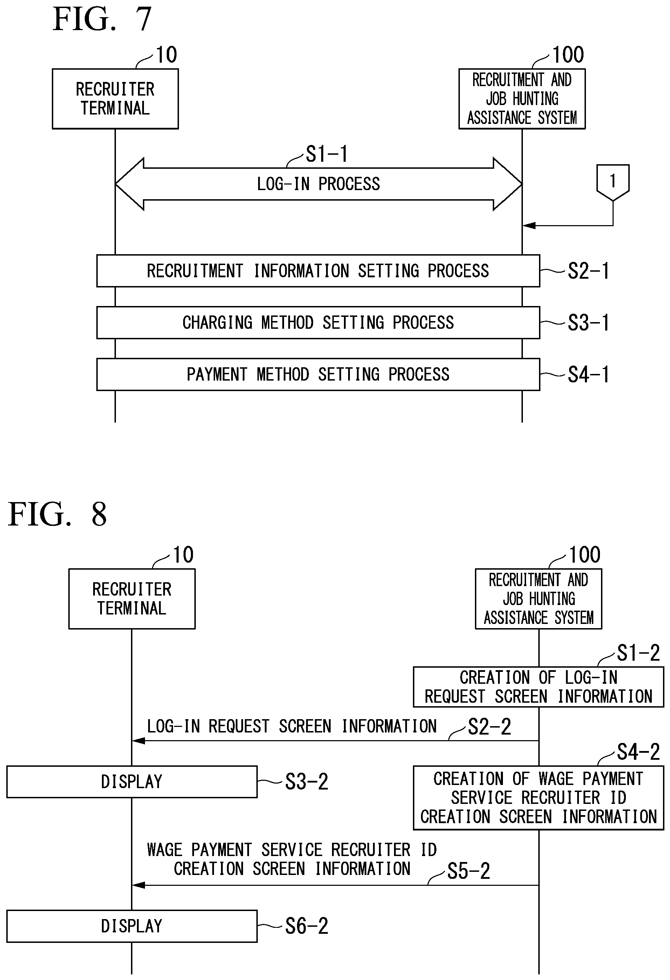

An example of an operation sequence in the assistance system 1 will be described with reference to FIGS. 7 to 12.

FIGS. 7 to 12 are diagrams illustrating an example of an operation sequence in the assistance system 1 according to the present embodiment.

(Step S1-1) A log-in process is performed by the recruiter terminal 10 and the recruitment and job hunting assistance system 100.

(Step S2-1) A recruitment information setting process is performed by the recruiter terminal 10 and the recruitment and job hunting assistance system 100.

(Step S3-1) A charging method setting process is performed by the recruiter terminal 10 and the recruitment and job hunting assistance system 100.

(Step S4-1) A payment method setting process is performed by the recruiter terminal 10 and the recruitment and job hunting assistance system 100. Description will be continued with reference to FIG. 8.

(Step S1-2) The creation unit 103 creates log-in request screen information.

(Step S2-2) The communication unit 101 transmits the log-in request screen information created by the creation unit 103 to the recruiter terminal 10.

(Step S3-2) The communication unit 12 receives the log-in request screen information. The image processing unit 16 acquires the log-in request screen information from the communication unit 12 and causes the display unit 19 to display a log-in request screen.

(Step S4-2) The creation unit 103 creates wage payment service recruiter ID creation screen information.

(Step S5-2) The communication unit 101 transmits the wage payment service recruiter ID creation screen information created by the creation unit 103 to the recruiter terminal 10.

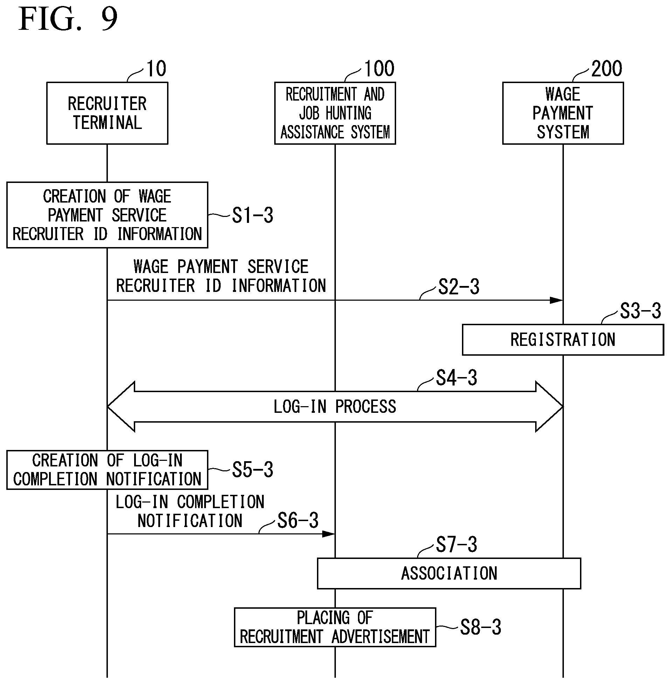

(Step S6-2) The communication unit 12 receives the wage payment service recruiter ID creation screen information. The image processing unit 16 acquires the wage payment service recruiter ID creation screen information from the communication unit 12 and causes the display unit 19 to display a wage payment service recruiter ID creation screen. Description will be continued with reference to FIG. 9.

(Step S1-3) The creation unit 103 creates wage payment service recruiter ID information.

(Step S2-3) The communication unit 101 transmits the wage payment service recruiter ID information created by the creation unit 103 to the wage payment system 200.

(Step S3-3) The communication unit 201 receives the wage payment service recruiter ID information, and the reception unit 202 receives the wage payment service recruiter ID information. The registration unit 206 acquires a second recruiter ID and a second recruiter password which are included in the wage payment service recruiter ID information and registers the acquired information in the recruiter log-in information of the storage unit 110 in correlation.

(Step S4-3) A log-in process is performed by the recruiter terminal 10 and the wage payment system 200.

(Step S5-3) The creation unit 14 creates a log-in completion notification.

(Step S6-3) The communication unit 12 transmits the created log-in completion notification to the recruitment and job hunting assistance system 100.

(Step S7-3) An association process is performed by the recruitment and job hunting assistance system 100 and the wage payment system 200.

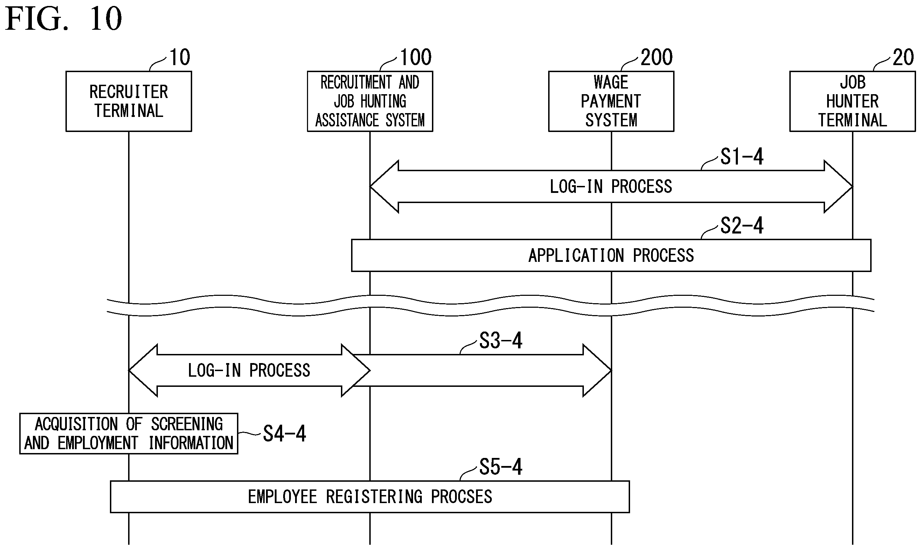

(Step S8-3) The placing unit 105 acquires information indicating a job category and a wage correlated with the synchronized first recruiter ID from the recruitment advertisement placement information and places a recruitment advertisement in the recruitment and job hunting assistance service. Description will be continued with reference to FIG. 10.

(Step S1-4) A log-in process is performed by the job hunter terminal 20 and the recruitment and job hunting assistance system 100.

(Step S2-4) An application process is performed by the job hunter terminal 20 and the recruitment and job hunting assistance system 100.

(Step S3-4) A log-in process is performed by the recruiter terminal 10, the recruitment and job hunting assistance system 100, and the wage payment system 200.

(Step S4-4) The operation unit 18 acquires screening and employment information which are input by a recruiter EM.

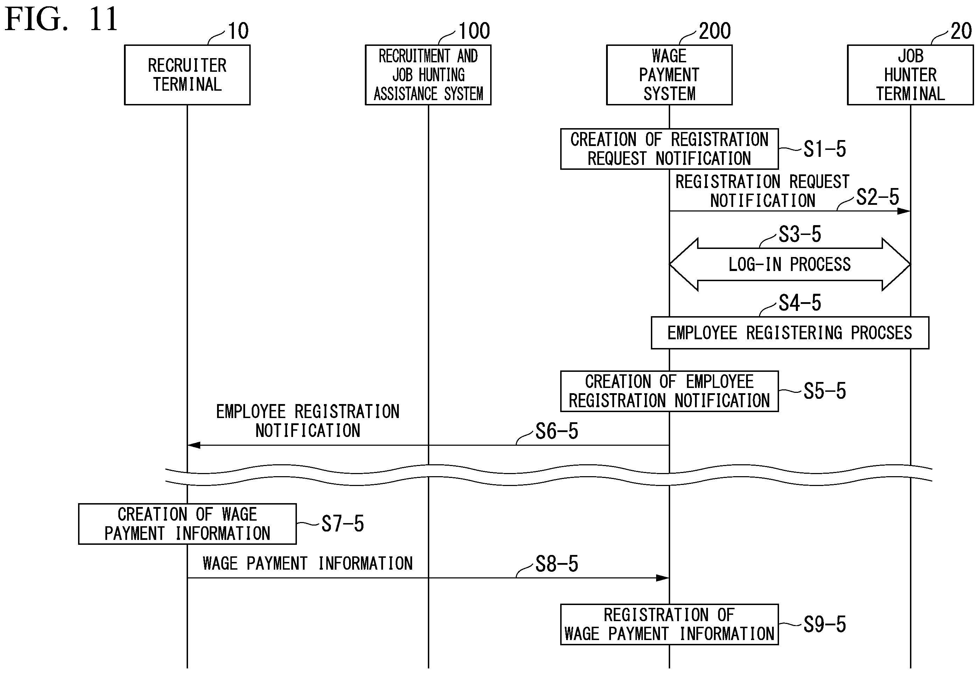

(Step S5-4) An employee registering process is performed by the recruiter terminal 10 and the wage payment system 200. Description will be continued with reference to FIG. 11**.**

(Step S1-5) The creation unit 203 creates a registration request notification.

(Step S2-5) The communication unit 201 transmits the registration request notification to the job hunter terminal 20.

(Step S3-5) A log-in process is performed by the job hunter terminal 20 and the wage payment system 200.

(Step S4-5) An employee registering process is performed by the job hunter terminal 20 and the wage payment system 200.

(Step S5-5) The creation unit 203 creates an employee registration notification.

(Step S6-5) The communication unit 201 transmits the employee registration notification to the recruiter terminal 10.

(Step S7-5) The creation unit 14 creates wage payment information.

(Step S8-5) The communication unit 12 transmits the wage payment information to the wage payment system 200.

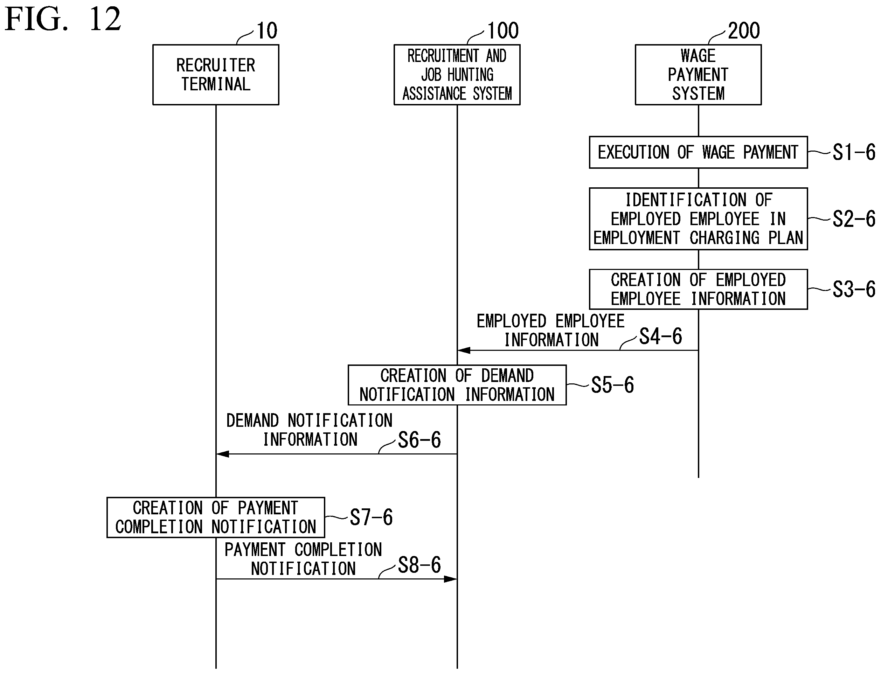

(Step S9-5) The communication unit 201 receives the wage payment information, and the reception unit 202 receives the wage payment information. The registration unit 206 registers an employee ID and an amount of wage included in the wage payment information in the wage information of the storage unit 210. Description will be continued with reference to FIG. 12.

(Step S1-6) The wage payment system 200 performs payment of a wage.

(Step S2-6) The identification unit 205 identifies an employee ID of each of one or more employees who are employed through a recruitment advertisement placed by charging for employment.

(Step S3-6) The creation unit 203 creates employed employee information.

(Step S4-6) The communication unit 201 transmits the employed employee information to the recruitment and job hunting assistance system 100.

(Step S5-6) The creation unit 103 creates demand notification information.

(Step S6-6) The communication unit 101 transmits the demand notification information to the recruiter terminal 10.

(Step S7-6) The creation unit 14 creates a payment completion notification.

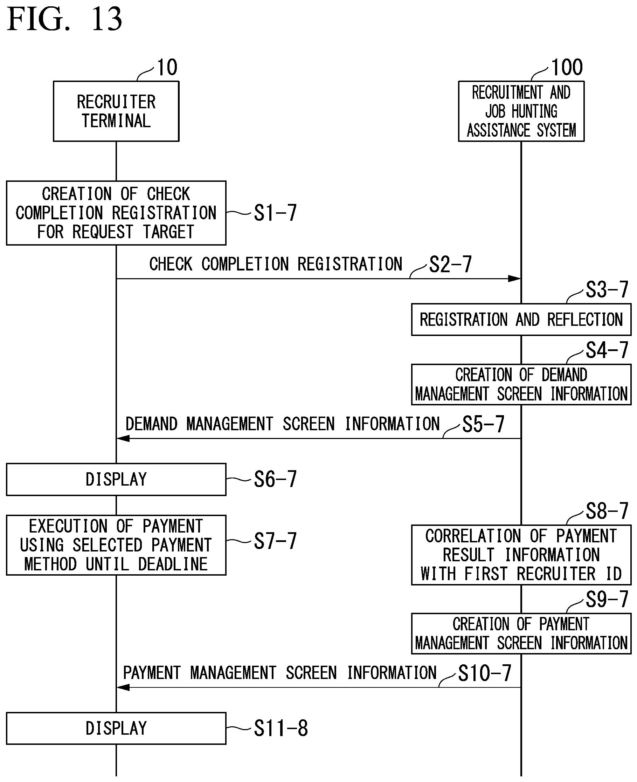

(Step S8-6) The communication unit 12 transmits the payment completion notification to the recruitment and job hunting assistance system. Description will be continued with reference to FIG. 13.

A demand managing process will be described with reference to FIG. 13.

A recruiter EM checks whether a demand target person included in the demand notification information is sure. Here, for example, it is assumed that a demand target person is sure.

(Step S1-7) The creation unit 14 creates a check completion registration for a demand target person.

(Step S2-7) The communication unit 12 transmits the check completion registration to the recruitment and job hunting assistance system 100.

(Step S3-7) The communication unit 101 receives the check completion registration, and the reception unit 102 receives the check completion registration. The registration unit 106 registers the check completion registration and reflects the check completion registration in the demand management information.

(Step S4-7) The creation unit 103 creates demand management screen information on the basis of the demand management information.

(Step S5-7) The communication unit 101 transmits the demand management screen information to the recruiter terminal 10.

(Step S6-7) The communication unit 12 receives the demand management screen information, and the image processing unit 14 causes the display unit 19 to display a demand management screen on the basis of the demand management screen information. For example, an amount of money demanded (an amount of fee) derived on the basis of monthly wage results acquired from the wage payment service is displayed in the demand management screen.

(Step S7-7) Payment is executed using the selected payment method until the deadline.

(Step S8-7) When it is notified that payment has been executed, the registration unit 106 registers payment result information in correlation with the first recruiter ID. The payment result information includes, for example, information indicating for what months payment has been executed.

(Step S9-7) The creation unit 103 creates a payment management screen. The payment management screen includes, for example, information indicating for what months a fee has been paid for each of one or more employees who has been employed through a recruitment advertisement placed by charging for employment.

(Step S10-7) The communication unit 101 transmits payment management screen information to the recruiter terminal 10.

(Step S11-7) The communication unit 12 receives the payment management screen information, and the image processing unit 14 causes the display unit 19 to display a payment management screen on the basis of the payment management screen information.

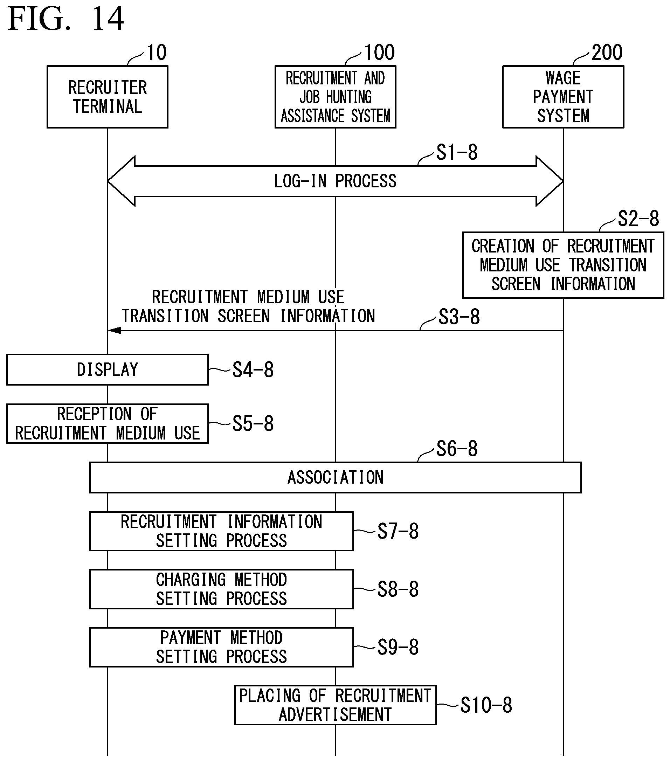

In the embodiment, an example in which the recruiter terminal 10 first logs in on the recruitment and job hunting assistance system 100 and then logs in on the wage payment system 200 has been described above, but the present invention is not limited to this example. For example, the recruiter terminal 10 may first log in on the wage payment system 200 and then log in on the recruitment and job hunting assistance system 100. A process flow in this case will be described with reference to FIG. 14. FIG. 14 is a diagram illustrating another example of the operation sequence in the assistance system 1 according to the present embodiment.

(Step S1-8) A log-in process is performed by the recruiter terminal 10 and the wage payment system 200.

(Step S2-8) The transition unit 204 creates recruitment medium use transition screen information for transition to a screen for using a recruitment medium.

(Step S3-8) The communication unit 201 transmits the recruitment medium use transition screen information to the recruiter terminal 10.

(Step S4-8) The communication unit 12 receives the recruitment medium use transition screen information, and the image processing unit 16 causes the display unit 19 to display a recruitment medium use transition screen on the basis of the recruitment medium use transition screen information.

(Step S5-8) The operation unit 18 receives an operation of using a recruitment medium from a recruiter EM.

(Step S6-8) An association process is performed by the recruiter terminal 10, the recruitment and job hunting assistance system 100, and the wage payment system 200. Steps S7-8 to S9-8 are the same as Steps S2-1 to S4-1 in FIG. 7, and thus description thereof will be omitted.

(Step S10-8) The placing unit 105 acquires information indicating a job category and a wage correlated with the synchronized first recruiter ID from the recruitment advertisement placement information and places a recruitment advertisement in the recruitment and job hunting assistance service.

A process of creating an employment plan for employees will be described below.

### (Recruiter terminal 10)

A log-in process is performed by the recruiter terminal 10 and the recruitment and job hunting assistance system 100, and an employment plan creating process is performed by allowing a recruiter EM to perform an operation of creating an employment plan. The employment plan creating process will be described. The operation unit 18 receives the operation of creating an employment plan. The creation unit 14 creates an employment plan creation request on the basis of the operation received by the operation unit 18 and transmits the created employment plan creation request from the communication unit 12 to the recruitment and job hunting assistance system 100.

Employment plan creation screen information which is transmitted from the recruitment and job hunting assistance system 100 in response to the employment plan creation request is received by the communication unit 12. The image processing unit 16 acquires the employment plan creation screen information from the communication unit 12 and causes the display unit 19 to display an employment plan creation screen (not illustrated) on the basis of the acquired employment plan creation screen information. An example of the employment plan creation screen includes a box for inputting a future employment plan and a transmission button. The future employment plan includes a theoretical yearly income, a theoretical monthly income, a job category, a place of work, and a desired employment time.

When a recruiter EM has performed an operation of inputting a future employment plan on the employment plan creation screen and pressing the transmission button, the operation unit 18 receives the operation. The creation unit 14 creates employment plan information including information indicating a recruiter **ID** and a future employment plan on the basis of the operation received by the operation unit 18 and transmits the created employment plan information from the communication unit 12 to the recruitment and job hunting assistance system 100.

Employment budget management screen information which is transmitted from the recruitment and job hunting assistance system 100 in response to the employment plan information is received by the communication unit 12. The image processing unit 16 acquires the employment budget management screen information from the communication unit 12 and causes the display unit 19 to display an employment budget management screen on the basis of the acquired employment budget management screen information. For example, the employment budget management screen includes information indicating a current amount of money demanded for each month and information indicating an amount of money demanded when it is assumed that employment has been completed. For example, when information indicating an employment plan indicates that it is scheduled to employ an employee of 3,600,000 yen per year (or 200,000 per month), the information indicating an employment plan includes the information indicating the current amount of money demanded and the information indicating the amount of money demanded when it is assumed that employment has been completed. When the employment budget management screen is displayed on the recruiter terminal 10, the recruiter EM can ascertain the future employment plan.

Recruitment advertisement placement recommendation screen information which is transmitted from the recruitment and job hunting assistance system 100 in response to the employment budget management screen information is received by the communication unit 12. The image processing unit 16 acquires the recruitment advertisement placement recommendation screen information from the communication unit 12 and causes the display unit 19 to display a recruitment advertisement placement recommendation screen on the basis of the acquired recruitment advertisement placement recommendation screen information. The recruitment advertisement placement recommendation screen includes information for recommending placement of a recruitment advertisement in a recruitment medium on the basis of the employment plan, a positive button for agreeing to placement of the recruitment advertisement in the recruitment medium, and a negative button for rejecting placement of the recruitment advertisement in the recruitment medium. Here, it is assumed that a recruiter EM has performed an operation of pressing (selecting) the positive button. When the recruiter EM has performed an operation of pressing (selecting) the negative button, the operation sequence ends.

When the recruiter EM has performed an operation of pressing (selecting) the positive button, the operation unit 18 receives the operation of pressing the positive button. The creation unit 14 creates an additional placement request on the basis of the operation received by the operation unit 18 and transmits the created additional placement request from the communication unit 12 to the recruitment and job hunting assistance system 100.

### (Recruitment and job hunting assistance system 100)

A log-in process is performed by the recruiter terminal 10 and the recruitment and job hunting assistance system 100, and the communication unit 101 receives an employment plan creation request transmitted from the recruiter terminal 10. The employment plan creating process will be described. The reception unit 102 acquires the employment plan creation request from the communication unit 101 and receives the acquired employment plan creation request. The creation unit 103 acquires the employment plan creation request from the reception unit 102, creates employment plan creation screen information on the basis of the acquired employment plan creation request, and transmits the created employment plan creation screen information from the communication unit 101 to the recruiter terminal 10.

Employment plan information which is transmitted from the recruiter terminal 10 in response to the employment plan creation screen information is received by the communication unit 101. The reception unit 102 acquires employment plan information from the communication unit 101 and receives the acquired employment plan information. The registration unit 105 acquires the employment plan information from the reception unit 102 and registers the acquired employment plan information in the storage unit 110.

The derivation unit 104 derives an amount of money demanded when it is assumed that employment has been completed for each month on the basis of the future employment plan included in the employment plan information. The creation unit 103 creates employment budget management screen information indicating an employment budget management screen including information indicating a current amount of money demanded for each month and information indicating an amount of money demanded when it is assumed that employment has been completed. The creation unit 103 transmits the created employment budget management screen information from the communication unit 101 to the recruiter terminal 10.

After transmitting the employment budget management screen information, the creation unit 103 creates recruitment advertisement placement recommendation screen information for recommending placement of a recruitment advertisement on the basis of the future employment plan included in the employment plan information. The creation unit 103 transmits the created recruitment advertisement placement recommendation screen information from the communication unit 101 to the recruiter terminal 10.

When an additional placement request which is transmitted from the recruiter terminal 10 in response to the recruitment advertisement placement recommendation screen information is received by the communication unit 101, a process subsequent to the recruitment information setting process is performed.

### (Operations of assistance system 1)

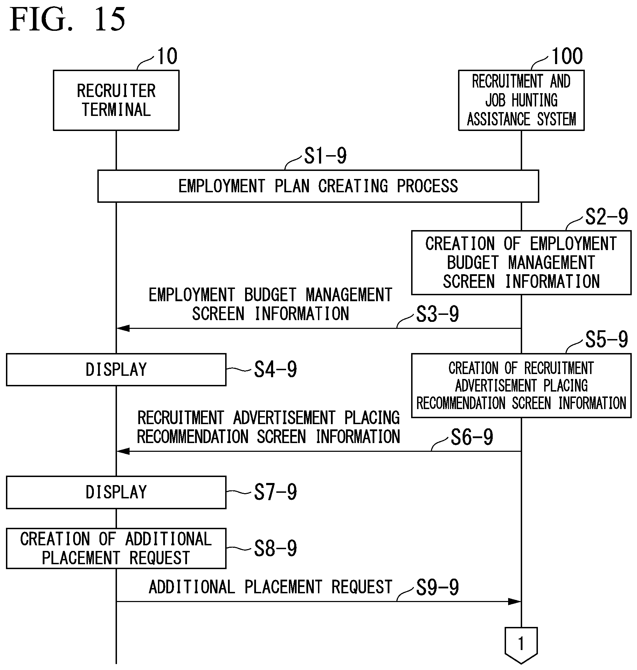

An example of operations in the assistance system 1 will be described below with reference to FIG. 15. FIG. 15 is a flowchart illustrating an example of a flow of operations in the assistance system 1 according to the present embodiment.

(Step S1-9) An employment plan creating process is performed by the recruiter terminal 10 and the recruitment and job hunting assistance system 100.

(Step S2-9) The creation unit 103 creates employment schedule management screen information.

(Step S3-9) The communication unit 101 transmits the employment schedule management screen information to the recruiter terminal 10.

(Step S4-9) The communication unit 12 receives the employment schedule management screen information, and the image processing unit 14 causes the display unit 19 to display an employment schedule management screen on the basis of the employment schedule management screen information.

(Step S5-9) The creation unit 103 creates recruitment advertisement placement recommendation screen information.

(Step S6-9) The communication unit 101 transmits the recruitment advertisement placement recommendation screen information to the recruiter terminal 10.

(Step S7-9) The communication unit 12 receives the recruitment advertisement placement recommendation screen information, and the image processing unit 14 causes the display unit 19 to display a recruitment advertisement placement recommendation screen on the basis of the recruitment advertisement placement recommendation screen information.

(Step S8-9) The creation unit 14 creates an additional placement request.

(Step S9-9) The communication unit 12 transmits the additional placement request to the recruitment and job hunting assistance system 100.

A process flow when an employee has retired will be described below.

### (Recruiter terminal 10)

A log-in process is performed by the recruiter terminal 10 and the wage payment system 200, and a recruiter EM performs an operation of deleting an employee ID of a retired employee on the operation unit 18. When the recruiter EM has performed an operation of deleting an employee ID of a retired employee, the operation unit 18 receives the operation. The creation unit 14 creates a deletion request including the employee ID of a retired employee on the basis of the operation received by the operation unit 18 and transmits the created deletion request from the communication unit 12 to the wage payment system 200.

When a wage payment day has come, the creation unit 14 creates wage payment information and transmits the created wage payment information from the communication unit 12 to the wage payment system 200.

A demand stop notification which is transmitted from the wage payment system 200 in response to the wage payment information is received by the communication unit 12. A demand stopping process will be described. The image processing unit 16 acquires the demand stop notification from the communication unit 12 and causes the display unit 19 to display information (such as an employee ID) indicating a retired employee for which a demand is stopped on the basis of the acquired demand stop notification. In this way, the demand stopping process in the recruiter terminal 10 ends.

### (Recruitment and job hunting assistance system 100)

Retired employee notification information transmitted from the wage payment system 200 is received by the communication unit 101. A demand stopping process will be described. The reception unit 102 acquires the retired employee notification information from the communication unit 101 and receives the acquired retired employee notification information. The update unit 208 acquires the retired employee notification information from the reception unit 102 and updates a second job hunter ID and information correlated with the second job hunter ID on the basis of the employee ID and the second job hunter ID of each retired employee which are included in the acquired retired employee notification information by deleting the second job hunter ID and the information from the demand management information of the storage unit 110.

The creation unit 103 creates a demand stop notification for notifying the recruiter EM of a retired employee for which demand of a fee is stopped and including the employee ID of the retired employee and transmits the created demand stop notification from the communication unit 101 to the recruiter terminal 10. The creation unit 103 may notify the recruiter EM of the retired employee, for example, by an electronic mail. In this way, the demand stopping process in the recruitment and job hunting assistance system 100 ends.

### (Wage payment system 200)

A deletion request transmitted from the recruiter terminal 10 is received by the communication unit 101. The reception unit 202 acquires and receives the deletion request from the communication unit 101. The update unit 208 acquires the deletion request from the reception unit 202 and deletes an employee ID included in the acquired deletion request and information correlated with the employee ID from the first employee information and the second employee information.

Thereafter, wage payment information transmitted from the recruiter terminal 10 is received by the communication unit 101. The reception unit 202 acquires and receives the wage payment information from the communication unit 101. The registration unit 205 acquires the wage payment information from the reception unit 202 and registers information indicating an employee ID and an amount of wage included in the acquired wage payment information in the wage information of the storage unit 210.

After the wage payment system 200 has performed payment of a wage, a demand stopping process is performed. The demand stopping process will be described. The identification unit 205 identifies a retired employee out of one or more employees who have been employed through a recruitment advertisement placed by charging for employment.

For example, the identification unit 205 acquires a first recruiter ID correlated with each of one or more employee IDs included in the wage payment information from the second employee information of the storage unit 210. The identification unit 205 acquires one or more first recruiter IDs correlated with a second job hunter ID out of the acquired one or more first recruiter IDs from the second employee information. The identification unit 205 acquires one or more first recruiter IDs in which the charging method is charging for employment from the recruitment advertisement placement information of the storage unit 110 of the recruitment and job hunting assistance system 100 associated therewith. The identification unit 205 acquires one or more first recruiter IDs in which the charging method is charging for employment out of the acquired one or more first recruiter IDs. The identification unit 205 identifies a second job hunter ID corresponding to each of the acquired one or more first recruiter IDs. The identification unit 205 identifies one or more second job hunter IDs other than the identified one or more second job hunter IDs out of the second job hunter IDs included in the demand management information of the storage unit 110 of the recruitment and job hunting assistance system 100. Accordingly, it is possible to identify second job hunter IDs of one or more retired employees out of one or more employees who have been employed through a recruitment advertisement placed by charging for employment.

The demand stopping process will be described below. The creation unit 14 creates retired employee information for notifying the recruitment and job hunting assistance system 100 of one or more retired employees including employee IDs and second job hunter IDs of one or more retired employees and transmits the created retired employee information from the communication unit 201 to the recruitment and job hunting assistance system 100. In this way, the demand stopping process in the wage payment system 200 ends.

### (Operations of assistance system 1)

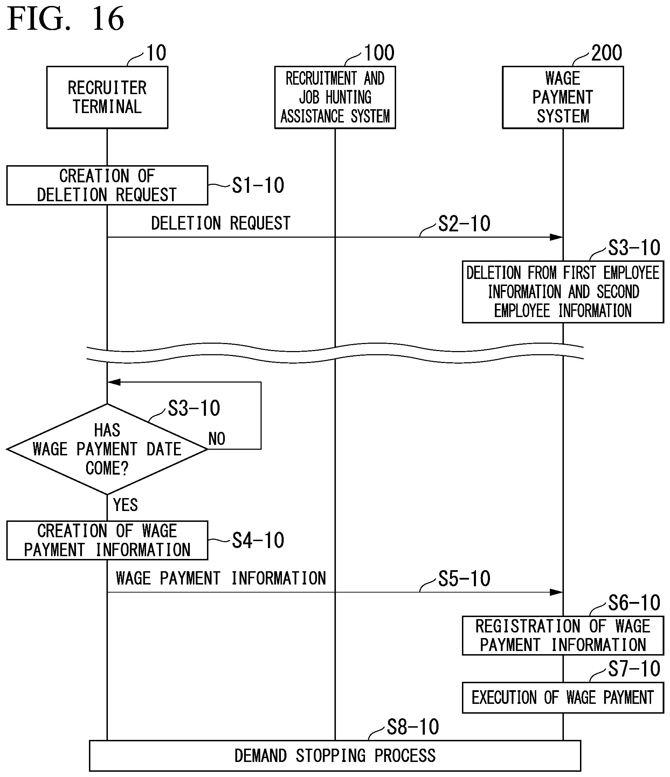

An example of an operation flow of the assistance system 1 will be described below with reference to FIG. 16.

FIG. 16 is a flowchart illustrating an example of an operation flow of the assistance system 1 according to the present embodiment.

(Step S1-10) The creation unit 14 creates a deletion request.

(Step S2-10) The communication unit 12 transmits the deletion request to the wage payment system 200.

(Step S3-10) The update unit 208 deletes employee information from customer management information.

(Step S4-10) The creation unit 14 determines whether a wage payment day has come. When the wage payment day has not come, the operation flow returns to Step S3-10.

(Step S5-10) The creation unit 14 creates wage payment information when the wage payment day has come.

(Step S6-10) The communication unit 12 transmits the wage payment information to the wage payment system 200.

(Step S7-10) The registration unit 206 registers the wage payment information.

(Step S8-10) The wage payment system 200 performs wage payment.

(Step S9-10) A demand stopping process is performed by the recruiter terminal 10 and the wage payment system 200.

In the present embodiment, an example in which a first recruiter ID and a first recruiter password used for a recruiter EM to log in on the recruitment and job hunting assistance service and a second recruiter ID and a second recruiter password used for the recruiter EM to log in on the wage payment service are different has been described above, but they may be the same.

In the present embodiment, an example in which a first recruiter ID and a first recruiter password used for a recruiter EM to log in on the recruitment and job hunting assistance service and a second recruiter ID and a second recruiter password used for the recruiter EM to log in on the wage payment service are different has been described above, but they may be the same.

In the present embodiment, an example in which the number of recruiter terminals 10 and the number of job hunter terminals 10 are 1 has been described above, but the present invention is not limited to this example. For example, one or both of the number of recruiter terminals 10 and the number of job hunter terminals 10 may be two or greater. In this case, for example, at least some of a plurality of recruiter terminals 10 may be used by a plurality of different recruiters EM, and at least some of a plurality of job hunter terminals 20 may be used by a plurality of different job hunters AP.

In the present embodiment, the recruitment and job hunting assistance system 100 and the wage payment system 200 are provided as different devices, but the present invention is not limited to this example. For example, recruitment and job hunting assistance system 100 and the wage payment system 200 may be realized as a single device, or functions included in the recruitment and job hunting assistance system 100 and the wage payment system 200 may be arbitrarily combined and realized as a plurality of devices.

Advantageous effects of the present embodiment will be described below.

With the assistance system 1 according to the present embodiment, the recruitment and job hunting assistance system 100 provides a service of running a recruitment advertisement on a web site. The recruitment and job hunting assistance system includes the creation unit 103 configured to create payment method selection screen information indicating a payment method selection screen for selecting a payment method out of a plurality of payment methods for compensation for placing a recruitment advertisement in a recruitment medium and the output unit (the communication unit 101 in the embodiment) configured to output the payment method selection screen information created by the creation unit 103. With this configuration, a recruiter EM can be allowed to select compensation for placing a recruitment advertisement in a recruitment medium out of a plurality of payment methods, which can improve convenience.

The recruitment and job hunting assistance system 100 further includes the reception unit 101 configured to receive information indicating a payment method selected by a recruiter having referred to the payment method selection screen and the registration unit 106 configured to store the information indicating a payment method received by the reception unit 101 and identification information of the recruiter in the storage unit 110 in correlation. With this configuration, since the information indicating a payment method and the identification information of the recruiter EM can be stored in the storage unit 110 in correlation, it is possible to acquire the information indicating a payment method for compensation for placement of a recruitment advertisement in a recruitment medium from the identification information of the recruiter EM with reference to the storage unit 110.

In the recruitment and job hunting assistance system 100, the plurality of payment methods include lump-sum payment and installment payment of an incentive fee for placing the recruitment advertisement in the recruitment medium. With this configuration, the recruiter EM can be allowed to select one of lump-sum payment and installment payment of an incentive fee for placing the recruitment advertisement in the recruitment medium, which can improve convenience.

In the recruitment and job hunting assistance system 100, the creation unit 103 creates charging method selection screen information indicating a charging method selection screen for selecting a charging method out of a plurality of charging methods for placing a recruitment advertisement in the recruitment medium, and the output unit outputs the charging method selection screen information created by the creation unit 103. With this configuration, the recruiter EM can be allowed to select one charging method out of a plurality of charging methods for placing the recruitment advertisement in the recruitment medium, which can improve convenience.

In the recruitment and job hunting assistance system 100, the reception unit receives information indicating a charging method selected by a recruiter having referred to the charging method selection screen, and the registration unit 106 stores the information indicating a charging method received by the reception unit 102 and identification information of the recruiter in the storage unit 110 in correlation. With this configuration, since the information indicating a charging method for placing the recruitment advertisement in the recruitment medium and the identification information of the recruiter EM can be stored in the storage unit 110 in correlation, it is possible to acquire the information indicating a charging method from the identification information of the recruiter EM with reference to the storage unit 110.

In the recruitment and job hunting assistance system 100, the plurality of charging methods include charging for employment and charging for running. With this configuration, the recruiter EM can be allowed to select one of charging for employment and charging for running as the charging method for placing the recruitment advertisement in the recruitment medium, which can improve convenience.

In the recruitment and job hunting assistance system 100, the creation unit 103 creates the payment method selection screen information when the reception unit 102 receives information indicating the charging for employment. With this configuration, when the recruiter EM selects the charging for employment, the recruiter EM can be allowed to select a payment method of a fee for placing the recruitment advertisement in the recruitment medium from a plurality of payment methods, which can improve convenience.

With the assistance system 1 according to the present embodiment, the recruitment and job hunting assistance system 100 includes the creation unit 103 configured to create log-in request screen information indicating a log-in request screen for requesting log-in on the wage payment service before placing the recruitment advertisement in the recruitment medium and the output unit configured to output the log-in request screen information created by the creation unit 103. With this configuration, since log-in on the wage payment service can be requested before placing the recruitment advertisement in the recruitment medium, it is possible to further improve convenience in comparison with a case in which log-in on the wage payment service is performed after placing the recruitment advertisement in the recruitment medium.

The recruitment and job hunting assistance system 100 further includes the placing unit 105 configured to place the recruitment advertisement in the recruitment medium after the output unit has output the log-in request screen information created by the creation unit 103. With this configuration, since the recruitment advertisement can be placed in the recruitment medium after outputting the log-in request screen information, it is possible to more reliably log in on the wage payment service in comparison with a case in which the recruitment advertisement is placed in the recruitment medium after outputting the log-in request screen information.

In the recruitment and job hunting assistance system 100, the placing unit 105 places the recruitment advertisement in the recruitment medium when the recruiter EM having referred to the log-in request screen has successfully logged in on the wage payment system. With this configuration, since the recruitment advertisement can be placed in the recruitment medium when the recruiter EM has successfully logged in on the wage payment system, it is possible to reliably log in on the wage payment service.

The recruitment and job hunting assistance system 100 further includes the reception unit 103 configured to receive a log-in notification for notifying that the recruiter EM has logged in on the wage payment service using a wage payment system recruiter ID (the second recruiter ID in the present embodiment), and the placing unit 105 places the recruitment advertisement in the recruitment medium when the reception unit 103 receives the log-in notification. With this configuration, since the recruitment advertisement can be placed in the recruitment medium when the recruiter EM has been notified that log-in on the wage payment system 200 has been performed, it is possible to reliably log in on the wage payment service.

In the recruitment and job hunting assistance system 100, the creation unit 103 creates wage payment service recruiter ID creation screen information indicating a wage payment service recruiter ID creation screen for requesting a recruiter EM to create a wage payment service recruiter ID for logging in on the wage payment service, and the output unit outputs the wage payment service recruiter ID creation screen information created by the creation unit 103. With this configuration, since the recruiter EM can be requested to create a wage payment service recruiter ID for logging in on the wage payment system 200, it is possible to improve convenience for the recruiter EM to log in on the wage payment system 200.

The recruitment and job hunting assistance system 100 further includes the reception unit 102 configured to receive the wage payment service recruiter ID input by the recruiter EM having referred to the wage payment service recruiter ID creation screen and the registration unit 106 configured to register log-in information for logging in on the wage payment service in the storage unit 110 on the basis of the wage payment service recruiter ID received by the reception unit 102. With this configuration, it is possible to register log-in information such as the wage payment service recruiter ID and a password for logging in on the wage payment system 200 in the storage unit 110 on the basis of the wage payment service recruiter ID input by the recruiter EM. Since it is not necessary to register the recruiter EM at the time of log-in, it is possible to improve convenience for logging in on the wage payment system 200.

With the assistance system 1 according to the present embodiment, the recruitment and job hunting assistance system 100 includes the creation unit 103 configured to create log-in request screen information indicating a log-in request screen for requesting log-in on the wage payment service, the output unit configured to output the log-in request screen information created by the creation unit 103, and the association unit 107 configured to synchronize a recruitment and job hunting assistance system recruiter ID (the first recruiter ID in the present embodiment) for logging in on the recruitment and job hunting assistance service with the wage payment service when the recruiter EM having referred to the log-in request screen has successfully logged in on the wage payment service. With this configuration, since a recruitment and job hunting assistance system recruiter ID for logging in on the recruitment and job hunting assistance service can be synchronized with the wage payment service when the recruiter EM has successfully logged in on the wage payment service, the recruiter EM does not need to set the same settings for both the recruitment and job hunting assistance service and the wage payment service, which can improve convenience.

In the recruitment and job hunting assistance system 100, the creation unit 103 creates the log-in request screen information before placing a recruitment advertisement in a recruitment medium, and the recruitment and job hunting assistance system further includes the placing unit 105 configured to place the recruitment advertisement in the recruitment medium after the output unit has output the log-in request screen information created by the creation unit 103. With this configuration, since the recruitment advertisement can be placed in the recruitment medium after the log-in request screen information has been output, it is possible to more reliably log in on the wage payment service in comparison with a case in which the recruitment advertisement is placed in the recruitment medium before outputting the log-in request screen information.

In the recruitment and job hunting assistance system 100, the placing unit 105 places the recruitment advertisement in the recruitment medium after the association unit 107 has synchronized the recruitment and job hunting assistance system recruiter ID with the wage payment service. With this configuration, since the recruitment advertisement can be placed in the recruitment medium after the recruitment and job hunting assistance system recruiter ID has been synchronized with the wage payment service, it is possible to more reliably log in on the wage payment service in comparison with a case in which the recruitment advertisement is placed in the recruitment medium before the recruitment and job hunting assistance system recruiter ID has been synchronized with the wage payment service.

The recruitment and job hunting assistance system 100 further includes the reception unit 102 configured to receive an association notification for notifying that the recruitment and job hunting assistance system recruiter ID has been synchronized with the wage payment service, and the placing unit 105 places the recruitment advertisement in the recruitment medium when the reception unit 102 has received the association notification. With this configuration, since the recruitment advertisement can be placed in the recruitment medium when it is notified that the recruitment and job hunting assistance system recruiter ID has been synchronized with the wage payment service, it is possible to reliably log in on the wage payment service.

In the recruitment and job hunting assistance system 100, the creation unit 103 creates synchronization permission notification screen information indicating a synchronization permission notification screen for requesting permission of synchronization of the recruitment and job hunting assistance system recruiter ID with the wage payment service, and the output unit outputs the synchronization permission notification screen information created by the creation unit 103. With this configuration, since permission of synchronization of the recruitment and job hunting assistance system recruiter ID with the wage payment service can be requested, it is possible to allow the recruiter EM to select whether the recruitment and job hunting assistance system recruiter ID is to be synchronized with the wage payment service.

The recruitment and job hunting assistance system 100 further includes the reception unit 103 configured to receive response information input by a recruiter having referred to as the synchronization permission notification screen, and the association unit 107 synchronizes the recruitment and job hunting assistance system recruiter ID with the wage payment service when the response information received by the reception unit 103 indicates permission. With this configuration, when the recruiter EM permits synchronization of the recruitment and job hunting assistance system recruiter ID with the wage payment service, it is possible to synchronize the recruitment and job hunting assistance system recruiter ID with the wage payment service. Accordingly, it is possible to improve convenience for the recruiter EM.

With the assistance system 1 according to the present embodiment, the wage payment system 200 provides a wage payment service. The wage payment system 200 includes the creation unit 203 configured to create log-in request screen information indicating a log-in request screen for requesting log-in on the wage payment service, the output unit (the communication unit 201 in the present embodiment) configured to output the log-in request screen information created by the creation unit 203, and the association unit 207 configured to synchronize a wage payment system recruiter ID for logging in on the wage payment service with the recruitment and job hunting assistance service when the recruiter has successfully logged in on the wage payment service. With this configuration, it is possible to synchronize the wage payment system recruiter ID for logging in on the wage payment service with a recruitment advertisement running service when the recruiter EM has successfully logged in on the wage payment system 200. The recruiter EM does not need to set the same settings for both the recruitment and job hunting assistance service and the wage payment service, which can improve convenience.

The wage payment system 200 further includes the transition unit 204 configured to cause the wage payment service to transition to the recruitment and job hunting assistance service, the creation unit 203 creates service transition screen information indicating a service transition screen for notifying that the wage payment service transitions to the recruitment and job hunting assistance service, and the output unit outputs the service transition screen information created by the creation unit 203. With this configuration, it is possible to allow the logged-in wage payment service to transition to the recruitment advertisement running service synchronized with the wage payment service. The recruiter EM does not need to perform an operation of causing the wage payment service to transition to the recruitment advertisement running service, which can improve convenience.

In the wage payment system 200, the output unit displays the service transition screen in a hop-up manner. With this configuration, since the service transition screen is displayed in a hop-up manner, it is not necessary to newly open a window, which can improve convenience.

In the wage payment system 200, the service transition screen includes information for inquiring about whether transition of the wage payment service to the recruitment and job hunting assistance service is to be permitted, and the transition unit causes the wage payment service to transition to the recruitment and job hunting assistance service when transition to the recruitment and job hunting assistance service has been permitted by the recruiter. With this configuration, when the recruiter EM has permitted transition to the recruitment advertisement running service, the wage payment service can transition to the recruitment advertisement running service, which can improve convenience.

In the wage payment system 200, the transition unit 204 does not causes the wage payment service to transition to the recruitment and job hunting assistance service when the recruiter EM has not permitted transition to the recruitment and job hunting assistance service. With this configuration, when the recruiter EM has not permitted transition to the recruitment advertisement running service, the wage payment service does not transition to the recruitment advertisement running service, which can improve convenience.

In the wage payment system 200, the association unit 207 synchronizes the wage payment service with the recruitment and job hunting assistance service on the basis of the recruitment and job hunting assistance system recruiter ID for logging in on the recruitment and job hunting assistance service when the recruiter EM has successfully logged in on the recruitment and job hunting assistance service. With this configuration, when the recruiter EM has successfully logged in on the recruitment and job hunting assistance service, the log-in can be synchronized between the recruitment and job hunting assistance service and the wage payment service, which can improve convenience.

With the assistance system 1 according to the present embodiment, the recruitment and job hunting assistance system 100 includes the reception unit 102 configured to receive employee information including employee identification information of an employee employed by the recruiter using the recruitment and job hunting assistance service and wage information of the employee, the creation unit 103 configured to create demand management screen information indicating a demand management screen for managing a fee demanded for the recruiter on the basis of the employee information received by the reception unit 102, and the output unit configured to output the demand management screen information created by the creation unit 103. With this configuration, a fee demanded for the recruiter EM can be managed on the basis of the employee information, which can improve convenience.

The recruitment and job hunting assistance system 100 further includes the derivation unit 104 configured to derive an amount of money demanded from the wage information of an employee on the basis of a predetermined charge rate, and the creation unit 103 creates demand management screen information indicating the demand management screen including the amount of money demanded derived by the derivation unit 104. With this configuration, the amount of money demanded can be derived from the wage information of an employee, which can improve convenience.

The recruitment and job hunting assistance system 100 further includes the derivation unit 104 configured to derive an amount of money demanded from the wage information of an employee on the basis of a payment method of a fee which is selected when a recruitment advertisement is placed in the recruitment medium, and the creation unit 103 creates demand management screen information indicating the demand management screen including the amount of money demanded derived by the derivation unit 104. With this configuration, the amount of money demanded can be derived from the wage information of an employee on the basis of the payment method of a fee selected when the recruitment advertisement is placed in the recruitment medium, which can improve convenience.

In the recruitment and job hunting assistance system 100, the payment method of a fee includes lump-sum payment and installment payment. With this configuration, the amount of money demanded can be derived from the wage information of a wage on the basis of one of the lump-sum payment and the installment payment, which can improve convenience.

In the recruitment and job hunting assistance system 100, the reception unit 102 receives the employee information from the wage payment system that provides the wage payment service. With this configuration, since the employee information can be received from the wage payment system 200, it is possible to further improve convenience in comparison with a case in which the employee information is input.

In the recruitment and job hunting assistance system 100, the creation unit 103 creates demand check request information for requesting check of a fee demanded for a recruiter on the basis of the employee information received by the reception unit 102, the output unit outputs the demand check request information created by the creation unit 103, the reception unit 102 receives a response to the demand check request information from the recruiter, and the creation unit 103 creates demand management screen information on the basis of the response to the demand check request information. With this configuration, the demand management screen information can be created on the basis of the response to the demand check request information, which can improve convenience.

With the assistance system 1 according to the present embodiment, the recruitment and job hunting assistance system 100 includes the reception unit 102 configured to receive information indicating an employment plan of a recruiter, the derivation unit 104 configured to derive a scheduled amount of money demanded after employment on the basis of the information indicating an employment plan of the recruiter EM received by the reception unit 102, the creation unit 103 configured to create employment budget demand management screen information indicating an employment budget demand management screen for managing an employment budget of the recruiter on the basis of the information indicating the scheduled amount of money demanded after employment derived by the derivation unit 104, and the output unit configured to output the employment budget demand management screen information created by the creation unit 103. With this configuration, the employment budget of the recruiter can be managed, which can improve convenience.

In the recruitment and job hunting assistance system 100, the reception unit 102 receives information indicating the employment plan of the recruiter EM including a theoretical yearly income or a theoretical monthly income, a job category, a place of work, and a desired employment time. With this configuration, the information indicating the employment plan of the recruiter can be received, and the employment budget of the recruiter can be managed, which can improve convenience.

In the recruitment and job hunting assistance system 100, the creation unit 103 creates employment plan input screen information indicating an employment plan input screen including a box for inputting the information indicating the employment plan of the recruiter EM, the output unit outputs the employment plan input screen information created by the creation unit 103, the reception unit 102 receives the employment plan input screen information to which the employment plan of the recruiter is input, and the creation unit 103 creates employment budget demand management screen information indicating an employment budget demand management screen including the employment plan input screen on the basis of the employment plan input screen information received by the reception unit 102. With this configuration, the employment budget of the recruiter EM can be managed on the basis of the employment plan of the recruiter EM, which can improve convenience.

In the recruitment and job hunting assistance system 100, the reception unit 102 receives employee information including employee identification information of an employee employed by the recruiter EM using the recruitment and job hunting assistance service and wage information of the employee, and the derivation unit 104 derives a demanded fee from the wage information of the employee on the basis of a predetermined charge rate. With this configuration, the demanded fee can be derived from the wage information of the employee, which can improve convenience.

In the recruitment and job hunting assistance system 100, the derivation unit 104 derives a scheduled amount of money demanded after employment on the basis of a payment method of a fee selected when the recruitment advertisement is placed in the recruitment medium, and the creation unit 103 creates employment budget demand management screen information indicating an employment budget demand management screen for managing the employment budget of the recruiter EM on the basis of the information indicating the scheduled amount of money demanded after employment derived on the basis of the payment method of a fee by the derivation unit 104. With this configuration, it is possible to manage the employment budget of the recruiter on the basis of the scheduled amount of money demanded after employment. Since the employment budget demand management screen can be presented to the recruiter EM, it is possible to improve convenience when the recruiter considers a future employment plan.

In the recruitment and job hunting assistance system 100, the creation unit 103 creates recruitment medium placement recommendation screen information indicating a recruitment medium placement recommendation screen for recommending that the recruitment advertisement is placed in the recruitment medium on the basis of the employment budget demand management screen information, and the output unit outputs the recruitment medium placement recommendation screen information created by the creation unit 103. With this configuration, since it can be recommended that the recruitment advertisement is placed in the recruitment medium, it is possible to improve convenience for the recruiter EM.

With the assistance system 1 according to the present embodiment, the wage payment system 200 includes the reception unit 202 configured to receive a wage payment request including identification information of an employee, the identification unit 205 configured to identify identification information of a retired employee on the basis of the identification information of an employee included in the wage payment request received by the reception unit 202 and identification information of an employee correlated with the identification information of the recruiter included in the customer management information (the recruitment advertisement placement information or the demand management information of the recruitment and job hunting assistance system 100 in the present embodiment), and the output unit configured to output the identification information of the retired employee identified by the identification unit 205. With this configuration, the identification information of the retired employee can be identified on the basis of the identification information of the employee included in the wage payment request and the identification information of the employee correlated with the identification information of the recruiter EM included in the customer management information, which can improve convenience.

In the wage payment system 200, the reception unit 202 receives the identification information of the retired employee, and the wage payment system 200 includes the update unit 208 configured to update the customer management information on the basis of the identification information of the retired employee received by the reception unit 202. With this configuration, the customer management information can be updated on the basis of the identification information of the retired employee, which can improve convenience.

In the wage payment system 200, the update unit 208 deletes the identification information of the retired employee from the identification information of the employees correlated with the identification information of the recruiter EM included in the customer management information. With this configuration, since the identification information of the retired employee can be deleted from the identification information of the employees correlated with the identification information of the recruiter EM, it is possible to further improve convenience in comparison with a case in which the identification information of the retired employee is manually deleted.

With the assistance system 1 according to the present embodiment, the recruitment and job hunting assistance system 100 includes the reception unit 102 configured to receive the identification information of the retired employee and the update unit 108 configured to delete the identification information of the retired employee received by the reception unit 102 from the demand management information for managing a fee to be demanded for the recruiter which is created on the basis of the employee information including the employee identification information of an employee employed by the recruiter using the recruitment and job hunting assistance service and the wage information of the employee on the basis of the identification information of the retired employee received by the reception unit 102. With this configuration, since the identification information of the retired employee can be deleted from the demand management information, it is possible to maintain the demand management information in the newest state.

While an embodiment of the present embodiment has been described above in detail with reference to the drawings, any specific configurations are not limited to that embodiment and include changes in design without departing from the gist of the present invention.

For example, a computer program for realizing the functions of the aforementioned devices may be recorded on a computer-readable recording medium, and a computer system may be caused to read and execute the program recorded on the recording medium. The "computer system" mentioned herein includes an OS or hardware such as peripherals.

The "computer-readable recording medium" is a writable nonvolatile memory such as a flexible disk, a magneto-optical disc, a ROM, or a flash memory, a portable medium such as a digital versatile disc (DVD), or a storage device such as a hard disk incorporated into a computer system.

The "computer-readable recording medium" may include a medium that holds a program for a predetermined time like a volatile memory (for example, a dynamic random access memory (DRAM)) in a computer system serving as a server or a client when a program is transmitted via a network such as the Internet or a communication circuit line such as a telephone line.

The program may be transmitted from a computer system storing the program in a storage device or the like to another computer system via a transmission medium or using carrier waves in the transmission medium. Here, the "transmission medium" for transmitting a program is a medium having an information transmitting function like a network (a communication network) such as the Internet or a communication circuit line (a communication line) such as a telephone line.

The program may be a program for realizing some of the aforementioned functions.

The program may be a program for realizing the aforementioned functions in combination with another program stored in advance in the computer system, that is, a so-called differential file (a differential program).

### REFERENCE SIGNS LIST

1 Assistance system
10 Recruiter terminal
12 Communication unit
14 Creation unit
15 Storage unit
16 Image processing unit
18 Operation unit
19 Display unit
20 Job hunter terminal
22 Communication unit
24 Creation unit
25 Storage unit
26 Image processing unit
28 Operation unit
29 Display unit
100 Recruitment and job hunting assistance system
101 Communication unit
102 Reception unit
103 Creation unit
104 Derivation unit
105 Placing unit
106 Registration unit
107 Association unit
108 Update unit
110 Storage unit
200 Wage payment system
201 Communication unit
202 Reception unit
203 Creation unit
204 Transition unit
205 Identification unit
206 Registration unit
207 Association unit
208 Update unit
210 Storage unit

## Claims

1. A recruitment and job hunting assistance system that provides a service of running a recruitment advertisement on a web site, the recruitment and job hunting assistance system comprising:
a creation unit configured to create payment method selection screen information indicating a payment method selection screen for selecting a payment method out of a plurality of payment methods for compensation for placing a recruitment advertisement in a recruitment medium; and
an output unit configured to output the payment method selection screen information created by the creation unit.

2. The recruitment and job hunting assistance system according to claim 1, further comprising:
a reception unit configured to receive information indicating a payment method selected by a recruiter having referred to the payment method selection screen; and
a registration unit configured to store the information indicating a payment method received by the reception unit and identification information of the recruiter in a storage unit in correlation.

3. The recruitment and job hunting assistance system according to claim 1, wherein the plurality of payment methods include lump-sum payment and installment payment of an incentive fee for placing the recruitment advertisement in the recruitment medium.

4. The recruitment and job hunting assistance system according to claim 2, wherein the creation unit creates charging method selection screen information indicating a charging method selection screen for selecting a charging method out of a plurality of charging methods for placing a recruitment advertisement in the recruitment medium, and
wherein the output unit outputs the charging method selection screen information created by the creation unit.

5. The recruitment and job hunting assistance system according to claim 4, wherein the reception unit receives information indicating a charging method selected by a recruiter having referred to the charging method selection screen, and
wherein the registration unit stores the information indicating a charging method received by the reception unit and identification information of the recruiter in the storage unit in correlation.

6. The recruitment and job hunting assistance system according to claim 4, wherein the plurality of charging methods include charging for employment and charging for running.

7. The recruitment and job hunting assistance system according to claim 6, wherein the creation unit creates the payment method selection screen information when the reception unit receives information indicating the charging for employment.

8. A recruitment and job hunting assistance method that is performed by a recruitment and job hunting assistance system that provides a service of running a recruitment advertisement on a web site, the recruitment and job hunting assistance method comprising:
creating payment method selection screen information indicating a payment method selection screen for selecting a payment method out of a plurality of payment methods for compensation for placing a recruitment advertisement in a recruitment medium; and
outputting the created payment method selection screen information.

9. A program causing a computer to perform:
a step of creating payment method selection screen information indicating a payment method selection screen for selecting a payment method out of a plurality of payment methods for compensation for placing a recruitment advertisement in a recruitment medium; and
a step of outputting the created payment method selection screen information.
